# EUROPÄISCHE PATENTSCHRIFT

(11) **EP 3 677 128 B1**
(45) Veröffentlichungstag und Bekanntmachung des Hinweises auf die Patenterteilung: **22.03.2023**
(21) Anmeldenummer: 19217477.9
(22) Anmeldetag: 18.12.2019
(51) Int. Cl.: A24C 5/32

(54) **FÖRDERN VON STABFÖRMIGEN ARTIKELN DER TABAK VERARBEITENDEN INDUSTRIE**
CONVEYING OF ROD-SHAPED ARTICLES FROM THE TOBACCO PROCESSING INDUSTRY
TRANSPORT D'ARTICLES EN FORME DE TIGE DE L'INDUSTRIE DE TRAITEMENT DU TABAC

(30) Priorität: 07.01.2019 DE 102019100210
(43) Veröffentlichungstag der Anmeldung: 08.07.2020
(73) Patentinhaber: Körber Technologies GmbH, 21033 Hamburg (DE)
(72) Erfinder: HANSEN, Volker, 22453 Hamburg (DE); WESNER, Gregor, 22043 Hamburg (DE); HARTMANN, Stefan, 21358 Mechtersen (DE)
(74) Vertreter: Seemann & Partner Patentanwälte mbB

(56) Entgegenhaltungen:
- EP-A1- 3 128 861
- EP-B1- 1 510 142
- DE-A1-102010 002 590

## Beschreibung

Die Erfindung betrifft eine Fördertrommel zum queraxialen Fördern von stabförmigen Artikeln der Tabak verarbeitenden Industrie, insbesondere Filterzigaretten oder Filterstäben oder Filterstabsegmenten, wobei die Fördertrommel in Umfangsrichtung, vorzugsweise starre, Aufnahmemulden aufweist, wobei die Fördertrommel um eine Rotationsachse rotierend antreibbar oder angetrieben ist, wobei die Fördertrommel eine geradzahlige Anzahl an Aufnahmemulden aufweist, wobei die Aufnahmemulden der Fördertrommel jeweils eine oder mehrere Saugluftbohrungen aufweisen.

Außerdem betrifft die Erfindung eine Förderanordnung zum queraxialen Fördern von stabförmigen Artikeln der Tabak verarbeitenden Industrie, insbesondere Filterzigaretten oder Filterstäben oder Filterstabsegmenten, mit einer, vorzugsweise starre, Aufnahmemulden aufweisenden ersten Fördertrommel zum queraxialen Fördern von stabförmigen Artikeln in den Aufnahmemulden, wobei die erste Fördertrommel um eine Rotationsachse rotierend antreibbar oder angetrieben ist, und mit einer, vorzugsweise starre, Aufnahmemulden aufweisenden zweiten Fördertrommel zum queraxialen Fördern von stabförmigen Artikeln in den Aufnahmemulden, wobei die zweite Fördertrommel um eine Rotationsachse rotierend antreibbar oder angetrieben ist.

Darüber hinaus betrifft die Erfindung eine Trommelmaschine der Tabak verarbeitenden Industrie, insbesondere Filteransetzmaschine oder Filterherstellungsmaschine oder Filterbereitstellungsmaschine. Weiterhin betrifft die Erfindung ein Verfahren zum queraxialen Fördern von stabförmigen Artikeln der Tabak verarbeitenden Industrie, insbesondere Filterzigaretten und/oder Filterstäbe und/oder Filterstabsegmente.

In Maschinen der Tabak verarbeitenden Industrie, insbesondere Filteransetzmaschinen, werden Fördertrommeln eingesetzt, um Zigaretten, Filterstücke oder deren Komponenten zu transportieren. Unter dem Begriff "Komponenten" von Zigaretten oder Filterstäben werden im Sinne der Erfindung auch Elemente von alternativen Rauchprodukten verstanden, wie zum Beispiel Heizelemente.

Das Fördern der vorgenannten stabförmigen Artikel bzw. Gegenstände während der Herstellung von Zigaretten, Filtern sowie von alternativen Rauchprodukten wird bei modernen Produktionsmaschinen der Tabak verarbeitenden Industrie im Allgemeinen mittels Fördertrommeln durchgeführt, deren Mantelfläche bzw. deren Trommelkörper zum queraxialen Fördern von stabförmigen Gegenständen (Zigaretten, Filterstäbe oder Filterstopfen, Filterzigaretten) mit Nuten oder Aufnahmemulden zum Aufnehmen der Artikel versehen ist.

Während der Förderung werden diese stabförmigen Artikel der Tabak verarbeitenden Industrie in Aufnahmemulden von Saugluft auf deren Fördertrommeln gehalten, die an entsprechenden Saugluftöffnungen der Aufnahmemulden anliegen. Diese Aufnahmemulden sind im Allgemeinen in Reihen queraxial hintereinander in Umfangsrichtung angeordnet.

In Filteransetzmaschinen werden auf den Fördertrommeln stabförmige Artikel, wie zum Beispiel Tabakstöcke oder Filterstopfen bzw. Filterstäbe, queraxial in Aufnahmemulden der Fördertrommeln gefördert. Hierbei sind die Aufnahmemulden in vorbestimmten, äquidistanten Teilungsabschnitten auf der Umfangsfläche der Fördertrommel angeordnet.

Darüber hinaus sind in EP 1 510 142 B1 ein Verfahren und eine Vorrichtung zum Bearbeiten von stabförmigen Artikeln der Tabak verarbeitenden Industrie beschrieben, wobei die stabförmigen Artikel von einem Übergabeförderer an einen Bearbeitungsförderer übergeben werden, so dass die Artikel während der Förderung auf dem Bearbeitungsförderer bearbeitet werden. Nach der Bearbeitung werden die stabförmigen Artikel von dem Bearbeitungsförderer zurück wieder an den Übergabeförderer abgegeben, wobei die Artikel während der auf dem Bearbeitungsförderer stattfindenden Förderung gerollt und/oder perforiert werden.

EP 3 128 861 A1 (entspricht WO 2015/154959 A1) zeigt eine Trommelanordnung, auf der stabförmige Artikel und Filter mit einem Umhüllungspapierstreifen umwickelt werden. Dazu ist eine Rollhand vorgesehen, die eine Rotation der Artikel und der Filter entlang der Trommelaußenseite bewirkt, so dass sich das Umhüllungspapier um die Artikel und die Filter wickelt.

Außerdem offenbart DE 10 2010 002 590 A1 ein Verfahren zum Herstellen von stabförmigen Artikeln der Tabak verarbeitenden Industrie. Zur Förderung von Tabakstöcken ist eine Fördertrommel vorgesehen, die zwei nebeneinander angeordnete Aufnahmemulden aufweist, die von einer Halteschulter getrennt sind.

Die Aufgabe der vorliegenden Erfindung besteht darin, Prozesse zum queraxialen Fördern von stabförmigen Artikeln bzw. für die Prüfung von stabförmigen Artikeln an einer Maschine der Tabak verarbeitenden Industrie, zu verbessern.

Gelöst wird diese Aufgabe durch eine Fördertrommel zum queraxialen Fördern von stabförmigen Artikeln der Tabak verarbeitenden Industrie, insbesondere Filterzigaretten oder Filterstäbe oder Filterstabsegmente, wobei die Fördertrommel in Umfangsrichtung, vorzugsweise starre, Aufnahmemulden aufweist, wobei die Fördertrommel um eine Rotationsachse rotierend antreibbar oder angetrieben ist, wobei die Fördertrommel eine geradzahlige Anzahl an Aufnahmemulden aufweist, wobei die Aufnahmemulden der Fördertrommel jeweils eine oder mehrere Saugluftbohrungen aufweisen, die dadurch weitergebildet ist, dass die Fördertrommel zwei Arten von Aufnahmemulden aufweist, wobei die Aufnahmemulden der ersten Art und die Aufnahmemulden der zweiten Art in Umfangsrichtung der Fördertrommel in einer Reihe hintereinander alternierend angeordnet sind, wobei die Aufnahmemulden der ersten Art und die Aufnahmemulden der zweiten Art sich in der Anordnung und/oder in den Positionen der Saugluftbohrungen in den Aufnahmemulden unterscheiden,
wobei die stabförmigen Artikel entlang eines ersten Förderwegs auf der Fördertrommel mittels der Fördertrommel von einem ersten Übergabebereich, in dem stabförmige Artikel aus den Aufnahmemulden einer stromaufwärtigen Fördertrommel an Aufnahmemulden der ersten Art der Fördertrommel jeweils übergeben werden oder übergebbar sind, zu einem zweiten Übergabebereich gefördert werden oder förderbar sind, wobei in dem zweiten Übergabebereich stabförmige Artikel aus den Aufnahmemulden der ersten Art der Fördertrommel an Aufnahmemulden einer weiteren stromabwärtigen Fördertrommel jeweils übergeben werden oder übergebbar sind, wobei entlang des ersten Förderwegs zwischen dem ersten Übergabebereich und dem zweiten Übergabebereich in den Aufnahmemulden der zweiten Art keine stabförmigen Artikel angeordnet sind oder werden,
wobei im Inneren der Fördertrommel ein ortsfester Steuerkörper für die Saugluftbohrungen der Aufnahmemulden der Fördertrommel vorgesehen ist, wobei entlang des ersten Förderwegs der stabförmigen Artikel auf der Fördertrommel zwischen dem ersten Übergabebereich und dem zweiten Übergabebereich jeweils die Saugluftbohrung der Aufnahmemulden der ersten Art oder jeweils die Saugluftbohrungen der Aufnahmemulden der ersten Art mittels des Steuerkörpers geöffnet sind, so dass die in den Aufnahmemulden der ersten Art angeordneten stabförmigen Artikel über die Saugluftbohrung der Aufnahmemulden der ersten Art oder über die Saugluftbohrungen der Aufnahmemulden der ersten Art mit Unterdruck jeweils beaufschlagt sind, wobei entlang des ersten Förderwegs jeweils die Saugluftbohrungen der Aufnahmemulden der zweiten Art mittels des Steuerkörpers geschlossen sind,
wobei bezogen auf die Rotationsrichtung der Fördertrommel nach dem ersten Förderweg stabförmige Artikel entlang eines zweiten Förderwegs auf der Fördertrommel mittels der Fördertrommel von einem Übergabebereich, in dem stabförmige Artikel aus den Aufnahmemulden einer Fördertrommel an Aufnahmemulden der zweiten Art der Fördertrommel jeweils übergeben werden oder übergebbar sind, zu einem weiteren Übergabebereich gefördert werden oder förderbar sind, wobei in dem weiteren Übergabebereich stabförmige Artikel aus den Aufnahmemulden der zweiten Art der Fördertrommel an Aufnahmemulden einer weiteren Fördertrommel jeweils übergeben werden oder übergebbar sind, wobei entlang des zweiten Förderwegs zwischen dem einen Übergabebereich und dem weiteren Übergabebereich in den Aufnahmemulden der ersten Art keine stabförmigen Artikel angeordnet sind oder werden,
wobei der Steuerkörper derart ausgebildet ist, dass entlang des zweiten Förderwegs der stabförmigen Artikel auf der Fördertrommel jeweils die Saugluftbohrung der Aufnahmemulden der zweiten Art oder jeweils die Saugluftbohrungen der Aufnahmemulden der zweiten Art mittels des Steuerkörpers geöffnet sind, so dass die in den Aufnahmemulden der zweiten Art angeordneten stabförmigen Artikel über die Saugluftbohrung der Aufnahmemulden der zweiten Art oder über die Saugluftbohrungen der Aufnahmemulden der zweiten Art mit Unterdruck jeweils beaufschlagt sind, wobei entlang des zweiten Förderwegs die Saugluftbohrungen der Aufnahmemulden der ersten Art mittels des Steuerkörpers geschlossen sind.

Die Erfindung beruht auf dem Gedanken, dass eine Fördertrommel bereitgestellt wird, die es ermöglicht, gleichzeitig bei Rotation der Fördertrommel zwei voneinander separate Förderwege für stabförmige Artikel, zum Beispiel bei einer Förderanordnung, auszubilden oder bereitzustellen. Dabei ist die Fördertrommel in Umfangsrichtung mit zwei verschiedenen Arten von Aufnahmemulden ausgebildet, so dass entlang des ersten Förderwegs stabförmige Artikel in den Aufnahmemulden der ersten Art gefördert werden, während entlang desselben ersten Förderwegs in den Aufnahmemulden der zweiten Art keine Artikel angeordnet sind oder werden. Darüber hinaus ist bei der Fördertrommel ein zweiter Förderweg vorgesehen, der vom ersten Förderweg der stabförmigen Artikel auf derselben Fördertrommel unabhängig und separat ist. Entlang des zweiten Förderwegs auf der Fördertrommel werden die in den Aufnahmemulden der zweiten Art aufgenommenen stabförmigen Artikel aufgenommen und zu dem weiteren Übergabebereich gefördert, so dass in dem weiteren Übergabebereich die stabförmigen Artikel aus den Aufnahmemulden der zweiten Art an eine nachfolgende Fördertrommel übergeben wird. Entlang des zweiten Förderwegs sind in den Aufnahmen der ersten Art keine stabförmigen Artikel angeordnet. Gemäß der Förderrichtung der Fördertrommel weisen der erste Förderweg und der zweite Förderweg die gleiche Förderrichtung auf, wobei entlang des ersten Förderwegs die Saugluftbohrungen der Aufnahmemulden der zweiten Art nicht mit Unterdruck beaufschlagbar sind, da die Saugluftbohrungen der Aufnahmemulden der zweiten Art mittels des Steuerkörpers geschlossen sind. Entsprechend sind entlang des zweiten Förderwegs die Saugluftbohrungen der Aufnahmemulden der ersten Art nicht mit Unterdruck beaufschlagbar, da mittels des Steuerkörpers die Saugluftbohrungen der Aufnahmemulden der ersten Art geschlossen sind.

Die erfindungsgemäße Fördertrommel kann in einer Ausgestaltung Bestandteil einer Förderanordnung mit mehreren Fördertrommeln sein, wobei nach der Übergabe der stabförmigen Artikel in die Aufnahmemulden der ersten Art im zweiten Übergabebereich an eine nachfolgende Fördertrommel die stabförmigen Artikel mittels ausschließlich einer oder mittels mehrerer Fördertrommeln queraxial gefördert werden und nach Durchlaufen einer Förderstrecke an den Übergabebereich für den zweiten Förderweg auf der Fördertrommel zurück an die Fördertrommel übergeben werden und anschließend entlang des zweiten Förderwegs weitergefördert werden, bis die stabförmigen Artikel am Ende des zweiten Förderwegs auf der Fördertrommel in einem Übergabebereich an eine nachfolgende Fördertrommel wieder übergeben werden.

Bei der Förderanordnung ist in einer Ausgestaltung vorgesehen, dass die stabförmigen Artikel entlang des ersten Förderwegs bzw. der Förderstrecke auf der Fördertrommel mit den geradzahligen Aufnahmemulden und nach der Abgabe der stabförmigen Artikel im zweiten Übergabebereich an eine Fördertrommel mit den ungeradzahligen Aufnahmemulden sowie nach der Rückführung der stabförmigen Artikel von der Fördertrommel mit den ungeradzahligen Aufnahmemulden in die Aufnahmemulden der zweiten Art der Fördertrommel mit geradzahligen Aufnahmemulden entlang des zweiten Förderwegs auf der Fördertrommel mit der geradzahligen Anzahl an Aufnahmemulden gefördert werden. Dadurch ist für die stabförmigen Artikel ein Wechsel von den Aufnahmemulden der ersten Art zu den oder in die Aufnahmemulden der zweiten Art auf der Fördertrommel mit den geradzahligen Aufnahmemulden möglich.

Dazu ist in einer Weiterbildung der Fördertrommel vorgesehen, dass der Steuerkörper der Fördertrommel jeweils Durchlassbereiche für die Saugluftbohrungen der Aufnahmemulden der ersten Art und für die Saugluftbohrungen der Aufnahmemulden der zweiten Art aufweist, wobei die Durchlassbereiche jeweils mit den Saugluftbohrungen der Aufnahmemulden der ersten Art und mit den Saugluftbohrungen der Aufnahmemulden der zweiten Art zusammenwirken, so dass die Aufnahmemulden mit Unterdruck beaufschlagbar sind und/oder wobei die Durchlassbereiche für die Saugluftbohrungen der Aufnahmemulden der ersten Art und die Durchlassbereiche für die Saugluftbohrungen der Aufnahmemulden der zweiten Art in axialer Richtung der Fördertrommel und in Umfangsrichtung der Fördertrommel versetzt angeordnet sind.

Dabei ist weiterhin bei einer Weiterbildung der Fördertrommel vorgesehen, dass wenigstens ein erster Durchlassbereich oder mehrere erste Durchlassbereiche des Steuerkörpers der Fördertrommel entlang des ersten Förderwegs der stabförmigen Artikel auf der Fördertrommel für die Aufnahmemulden der ersten Art vorgesehen sind und mit den Saugluftbohrungen der Aufnahmemulden der ersten Art zusammenwirken, so dass die Saugluftbohrungen der Aufnahmemulden der ersten Art mit Unterdruck beaufschlagbar sind, wobei entlang des ersten Förderwegs die Saugluftbohrungen der Aufnahmemulden der zweiten Art nicht mit Unterdruck beaufschlagt sind,
und dass wenigstens ein zweiter Durchlassbereich oder mehrere zweite Durchlassbereiche des Steuerkörpers der Fördertrommel entlang des zweiten Förderwegs der stabförmigen Artikel auf der Fördertrommel für die Aufnahmemulden der zweiten Art vorgesehen sind und mit den Saugluftbohrungen der Aufnahmemulden der zweiten Art zusammenwirken, so dass die Saugluftbohrungen der Aufnahmemulden der zweiten Art mit Unterdruck beaufschlagbar sind, wobei entlang des zweiten Förderwegs die Saugluftbohrungen der Aufnahmemulden der ersten Art nicht mit Unterdruck beaufschlagt sind.

Gemäß einem weiteren Aspekt ist bei der Fördertrommel vorgesehen, dass die Fördertrommel auf der Außenseite wenigstens einen, vorzugsweise starren, Ringkörper aufweist, wobei der wenigstens eine Ringkörper der Fördertrommel in Umfangsrichtung der Fördertrommel in regelmäßigen Abständen alternierend in einer Reihe hintereinander angeordnete Aufnahmemulden der ersten Art und Aufnahmemulden der zweiten Art aufweist.

Des Weiteren zeichnet sich die Fördertrommel dadurch aus, dass entlang des ersten Förderwegs und entlang des zweiten Förderwegs der stabförmigen Artikel auf der Fördertrommel die zu fördernden oder geförderten stabförmigen Artikel in längsaxialer Richtung in den Aufnahmemulden der ersten Art und in den Aufnahmemulden der zweiten Art nicht bewegt, insbesondere längsaxial verschoben, werden. Auch werden gemäß einem weiteren Aspekt die stabförmigen Artikel während ihrer Förderung entlang des ersten Förderwegs und entlang des zweiten Förderwegs während ihrer Förderung in den Aufnahmemulden der Fördertrommel nicht bearbeitet.

Überdies ist es bei einer Weiterbildung der Fördertrommel vorteilhaft, dass die Aufnahmemulden der ersten Art und die Aufnahmemulden der zweiten Art jeweils mehrere, insbesondere zwei oder drei, Saugluftbohrungen aufweisen, wobei die Saugluftbohrungen der jeweiligen Aufnahmemulden bezogen auf die Rotationsachse der Fördertrommel nebeneinander angeordnet sind, wobei über die Saugluftbohrungen die Aufnahmemulden jeweils mit Unterdruck beaufschlagbar sind, wobei die Saugluftbohrungen der Aufnahmemulden in Umfangsrichtung der Fördertrommel jeweils in Reihen hintereinander vorgesehen sind.

Ferner zeichnet sich die Fördertrommel gemäß einem weiteren Aspekt dadurch aus, dass in Bezug auf die Rotationsache der Fördertrommel die Saugluftbohrungen der Aufnahmemulden der ersten Art und die Saugluftbohrungen der Aufnahmemulden der zweiten Art entlang der Rotationsachse an unterschiedlichen Positionen in den Aufnahmemulden ausgebildet sind, wobei die Positionen der Saugluftbohrungen der Aufnahmemulden der ersten Art entlang der Rotationsachse der Fördertrommel nicht den Positionen der Saugluftbohrungen der Aufnahmemulden der zweiten Art entlang der Rotationsachse entsprechen.

Insbesondere ist es gemäß einer bevorzugten Ausführungsform der Fördertrommel vorgesehen, das der erste Übergabebereich, in dem stabförmige Artikel aus den Aufnahmemulden der stromaufwärtigen Fördertrommel an Aufnahmemulden der ersten Art der Fördertrommel jeweils übergeben werden oder übergebbar sind, dem Übergabebereich entspricht, in dem stabförmige Artikel aus den Aufnahmemulden einer Fördertrommel an die Aufnahmemulden der zweiten Art der Fördertrommel jeweils übergeben werden oder übergebbar sind, und/oder dass der zweite Übergabebereich, in dem stabförmige Artikel aus den Aufnahmemulden der ersten Art der Fördertrommel an Aufnahmemulden der weiteren stromabwärtigen Fördertrommel jeweils übergeben werden oder übergebbar sind, dem weiteren Übergabebereich entspricht, in dem die stabförmigen Artikel aus den Aufnahmemulden der zweiten Art der Fördertrommel an Aufnahmemulden einer weiteren Fördertrommel jeweils übergeben werden oder übergebbar sind.

Die Aufgabe wird ferner gelöst durch eine Förderanordnung zum queraxialen Fördern von stabförmigen Artikeln der Tabak verarbeitenden Industrie, insbesondere Filterzigaretten oder Filterstäbe oder Filterstabsegmente, mit einer, vorzugsweise starre, Aufnahmemulden aufweisenden ersten Fördertrommel zum queraxialen Fördern von stabförmigen Artikeln in den Aufnahmemulden, wobei die erste Fördertrommel um eine Rotationsachse rotierend antreibbar oder angetrieben ist, und mit einer, vorzugsweise starre, Aufnahmemulden aufweisenden zweiten Fördertrommel zum queraxialen Fördern von stabförmigen Artikeln in den Aufnahmemulden, wobei die zweite Fördertrommel um eine Rotationsachse rotierend antreibbar oder angetrieben ist, die dadurch weitergebildet ist, dass die erste Fördertrommel eine geradzahlige Anzahl an Aufnahmemulden aufweist und die zweite Fördertrommel eine ungeradzahlige Anzahl an Aufnahmemulden aufweist,
wobei die stabförmigen Artikel entlang eines ersten Förderwegs auf der ersten Fördertrommel mittels der ersten Fördertrommel zu einem Übergabebereich zwischen der ersten Fördertrommel und der zweiten Fördertrommel förderbar sind oder gefördert werden und die jeweils in den Aufnahmemulden der ersten Fördertrommel geförderten stabförmigen Artikel in Aufnahmemulden der zweiten Fördertrommel übergeben werden oder übergebbar sind,
wobei die von der ersten Fördertrommel übergebenen stabförmigen Artikel mittels der zweiten Fördertrommel zu dem Übergabebereich zwischen der ersten Fördertrommel und der zweiten Fördertrommel förderbar sind oder gefördert werden, und wobei die auf der zweiten Fördertrommel geförderten stabförmigen Artikel von der zweiten Fördertrommel an die erste Fördertrommel in die Aufnahmemulden der ersten Fördertrommel übergeben werden,
wobei die von der zweiten Fördertrommel an die erste Fördertrommel übergebenen stabförmigen Artikel entlang eines zweiten Förderwegs mittels der ersten Fördertrommel queraxial förderbar sind oder gefördert werden,
wobei die Aufnahmemulden der ersten Fördertrommel jeweils mehrere Saugluftbohrungen aufweisen, wobei die Saugluftbohrungen bezogen auf die Rotationsachse der ersten Fördertrommel nebeneinander angeordnet sind, oder jeweils eine Saugluftbohrungen aufweisen, wobei über die Saugluftbohrungen die Aufnahmemulden jeweils mit Unterdruck beaufschlagbar sind, wobei die Saugluftbohrungen der Aufnahmemulden in Umfangsrichtung der ersten Fördertrommel jeweils in Reihen hintereinander vorgesehen sind,
wobei im Inneren der ersten Fördertrommel ein ortsfester Steuerkörper für die Saugluftbohrungen der Aufnahmemulden der ersten Fördertrommel vorgesehen ist, wobei entlang des ersten Förderwegs der stabförmigen Artikel auf der ersten Fördertrommel jeweils eine erste Saugluftbohrung oder jeweils eine erste Kombination von Saugluftbohrungen der Aufnahmemulden mittels des Steuerkörpers geöffnet ist, so dass die in den Aufnahmemulden angeordneten stabförmigen Artikel über die erste Saugluftbohrung oder über die erste Kombination von Saugluftbohrungen mit Unterdruck jeweils beaufschlagt sind, wobei entlang des ersten Förderwegs jeweils eine zweite Saugluftbohrung oder jeweils eine zweite Kombination von Saugluftbohrungen der Aufnahmemulden mittels des Steuerkörpers geschlossen ist,
wobei der Steuerkörper derart ausgebildet ist, dass entlang des zweiten Förderwegs der stabförmigen Artikel auf der ersten Fördertrommel jeweils die zweite Saugluftbohrung oder jeweils die zweite Kombination von Saugluftbohrungen der Aufnahmemulden mittels des Steuerkörpers geöffnet ist, so dass die in den Aufnahmemulden angeordneten stabförmigen Artikel über die zweite Saugluftbohrung oder über die zweite Kombination von Saugluftbohrungen mit Unterdruck jeweils beaufschlagt sind, wobei entlang des zweiten Förderwegs die erste Saugluftbohrung oder jeweils die erste Kombination von Saugluftbohrungen der Aufnahmemulden mittels des Steuerkörpers geschlossen ist,
wobei die erste Fördertrommel zwei Arten von Aufnahmemulden aufweist, wobei die Aufnahmemulden der ersten Art und die Aufnahmemulden der zweiten Art in Umfangsrichtung der (ersten) Fördertrommel in einer Reihe hintereinander alternierend angeordnet sind, wobei die Aufnahmemulden der ersten Art und die Aufnahmemulden der zweiten Art sich in der Anordnung der Saugluftbohrungen und/oder in den Positionen der Saugluftbohrungen in den Aufnahmemulden unterscheiden,
wobei der Steuerkörper der ersten Fördertrommel jeweils Durchlassbereiche für die Saugluftbohrungen der Aufnahmemulden aufweist, wobei die Durchlassbereiche mit den Saugluftbohrungen der Aufnahmemulden zusammenwirken, so dass die Aufnahmemulden mit Unterdruck beaufschlagbar sind
wobei wenigstens ein erster Durchlassbereich oder mehrere erste Durchlassbereiche des Steuerkörpers der ersten Fördertrommel entlang des ersten Förderwegs der stabförmigen Artikel auf der ersten Fördertrommel für die Aufnahmemulden der ersten Art vorgesehen sind und mit den Saugluftbohrungen der Aufnahmemulden der ersten Art zusammenwirken, so dass die Saugluftbohrungen der Aufnahmemulden der ersten Art mit Unterdruck beaufschlagbar sind, wobei entlang des ersten Förderwegs Saugluftbohrungen der Aufnahmemulden der zweiten Art nicht mit Unterdruck beaufschlagt sind,
und wobei wenigstens ein zweiter Durchlassbereich oder mehrere zweite Durchlassbereiche des Steuerkörpers der ersten Fördertrommel entlang des zweiten Förderwegs der stabförmigen Artikel auf der ersten Fördertrommel für die Aufnahmemulden der zweiten Art vorgesehen sind und mit den Saugluftbohrungen der Aufnahmemulden der zweiten Art zusammenwirken, so dass die Saugluftbohrungen der Aufnahmemulden der zweiten Art mit Unterdruck beaufschlagbar sind, wobei entlang des zweiten Förderwegs die Saugluftbohrungen der Aufnahmemulden der ersten Art nicht mit Unterdruck beaufschlagt sind.

Insbesondere ist die erste Fördertrommel mit den geradzahligen Aufnahmemulden wie die voranstehend beschriebene Fördertrommel, insbesondere gemäß den Ansprüchen 1 bis 3, ausgebildet. Dadurch, dass entlang des ersten Förderwegs die Saugluftbohrungen der Aufnahmemulden der ersten Fördertrommel beaufschlagt sind, in denen stabförmige Artikel angeordnet sind, weist die (erste) Fördertrommel Aufnahmen einer ersten Art auf. Hierbei sind die Saugluftbohrungen der Aufnahmemulden der zweiten Art geschlossen. Entlang des zweiten Förderwegs, nachdem die stabförmigen Artikel an die zweite Fördertrommel mit den ungeradzahligen Aufnahmemulden abgegeben worden sind, und die stabförmigen Artikel anschließend von der (zweiten) Fördertrommel mit den ungeradzahligen Aufnahmemulden an die erste Fördertrommel mit den geradzahligen Aufnahmemulden zurückübergeben werden, sind die Aufnahmemulden der ersten Art der ersten Fördertrommel mit geradzahligen Aufnahmemulden entlang des zweiten Förderwegs geschlossen. Entlang des ersten Förderwegs sind die Aufnahmemulden, in denen kein Unterdruck an den Saugluftbohrungen anliegt, als Aufnahmemulden einer zweiten Art ausgebildet. Bei der Aufnahme von stabförmigen Artikeln in den Aufnahmen der zweiten Art von der die Artikel rückführenden zweiten Fördertrommel mit ungeradzahligen Aufnahmemulden werden die stabförmigen Artikel in den Aufnahmemulden der zweiten Art der ersten Fördertrommel entlang des zweiten Förderwegs angeordnet und mit Unterdruck beaufschlagt. Die Aufnahmemulden der ersten Art und die Aufnahmemulden der zweiten Art sind in Umfangsrichtung auf der ersten Fördertrommel (mit geradzahligen Aufnahmemulden) alternierend in einer Reihe ausgebildet bzw. angeordnet.

Außerdem zeichnet sich eine Weiterbildung der Förderanordnung dadurch aus, dass die Anzahl der Aufnahmemulden der zweiten Fördertrommel um eine Aufnahmemulde geringer oder um eine Aufnahmemulde größer ist als die Anzahl der Aufnahmemulden der ersten Fördertrommel.

Insbesondere werden entlang des ersten Förderwegs der stabförmigen Artikel auf der (ersten) Fördertrommel diese in den Aufnahmemulden der ersten Art mit Unterdruck beaufschlagt, während die Aufnahmemulden der zweiten Art entlang des ersten Förderwegs nicht mit Unterdruck beaufschlagt sind. Weiterhin sind entlang des zweiten Förderwegs der stabförmigen Artikel auf der (ersten) Fördertrommel die Aufnahmemulden der zweiten Art mit Unterdruck beaufschlagt, um die stabförmigen Artikel in den Aufnahmemulden zu halten, während in den Aufnahmemulden der ersten Art entlang des zweiten Förderwegs kein Unterdruck in den Aufnahmemulden der ersten Art anliegt.

Dazu ist es in einer Weiterbildung der Förderanordnung bevorzugt, dass die Durchlassbereiche für die Saugluftbohrungen in axialer Richtung der ersten Fördertrommel und/oder in Umfangsrichtung der ersten Fördertrommel versetzt angeordnet sind. Mittels der Durchlassbereiche ist es möglich, jeweils entlang des ersten Förderwegs entsprechend die Aufnahmemulden der ersten Art mit Unterdruck zu beaufschlagen und entlang des zweiten Förderwegs der stabförmigen Artikel auf der ersten Fördertrommel die Aufnahmemulden der zweiten Art mit Unterdruck zu beaufschlagen.

Darüber hinaus zeichnet sich die Förderanordnung gemäß einer Weiterbildung dadurch aus, dass bezogen auf die Förderrichtung der stabförmigen Artikel von der ersten Fördertrommel zur zweiten Fördertrommel gemäß dem ersten Förderweg stromaufwärts an der ersten Fördertrommel wenigstens eine weitere Fördertrommel, die um eine Rotationsachse rotierend angetrieben oder antreibbar ist, angeordnet ist,
wobei die wenigstens eine weitere stromaufwärtige Fördertrommel eine geradzahlige Anzahl von Aufnahmemulden aufweist, wobei die Aufnahmemulden der wenigstens einen weiteren Fördertrommel jeweils mehrere Saugluftbohrungen aufweisen, wobei die Saugluftbohrungen bezogen auf die Rotationsachse der weiteren Fördertrommel nebeneinander angeordnet sind, wobei über die Saugluftbohrungen die Aufnahmemulden jeweils mit Unterdruck beaufschlagbar oder beaufschlagt sind, wobei die Saugluftbohrungen in Umfangsrichtung der wenigstens einen weiteren Fördertrommel jeweils in Reihen hintereinander vorgesehen sind, wobei im Inneren der wenigstens einen weiteren Fördertrommel ein ortsfester Steuerkörper für die Saugluftbohrungen vorgesehen ist, wobei entlang des Förderwegs der stabförmigen Artikel von der wenigstens einen stromaufwärtigen weiteren Fördertrommel zu der ersten Fördertrommel gemäß dem ersten Förderweg der stabförmigen Artikel auf der ersten Fördertrommel jeweils eine erste Saugluftbohrung oder jeweils eine Kombination von Saugluftbohrungen der wenigstens einen weiteren Fördertrommel mittels des Steuerkörpers geöffnet sind, so dass die in den Aufnahmemulden angeordneten stabförmigen Artikel über die erste Saugluftbohrung oder über die erste Kombination von Saugluftbohrungen mit Unterdruck jeweils beaufschlagt sind,
wobei entlang des Förderwegs zur ersten Fördertrommel jeweils eine zweite Saugluftbohrung oder jeweils eine zweite Kombination von Saugluftbohrungen der Aufnahmemulden mittels des Steuerkörpers geschlossen ist, wobei entlang des Förderwegs der stabförmigen Artikel auf der wenigstens einen weiteren Fördertrommel von der ersten Fördertrommel weg stromabwärts jeweils die zweite Saugluftbohrung oder jeweils die zweite Kombination von Saugluftbohrungen der Aufnahmemulden mittels des Steuerkörpers geöffnet ist, so dass die in den Aufnahmemulden angeordneten stabförmigen Artikel über die zweite Saugluftbohrung oder über die zweite Kombination von Saugbohrungen mit Unterdruck beaufschlagt sind, wobei entlang des Förderwegs die erste Saugluftbohrung oder jeweils die erste Kombination von Saugbohrungen mittels des Steuerkörpers geschlossen ist.

Insbesondere ist die wenigstens eine weitere stromaufwärtige Fördertrommel baugleich oder im Wesentlichen baugleich zu der ersten Fördertrommel der Förderanordnung ausgebildet.

Darüber hinaus ist es in einer Ausgestaltung möglich, dass mehrere Fördertrommeln mit einer geradzahligen Anzahl an Aufnahmemulden in Förderrichtung der stabförmigen Artikel hintereinander angeordnet sind.

Insbesondere ist es bei der Förderanordnung bevorzugt, dass die Anzahl der Aufnahmemulden der ersten Fördertrommel der Anzahl der Aufnahmemulden der wenigstens einen weiteren Fördertrommel entspricht.

Um beispielsweise die stabförmigen Artikel in vertikaler Richtung nach oben und/oder nach unten zu fördern, ist es bei der Förderanordnung bevorzugt, dass die Rotationsachse der ersten Fördertrommel und die Rotationsachse der wenigstens einen weiteren Fördertrommel in einer senkrechten Ebene übereinander angeordnet sind.

Darüber hinaus ist es in einer vorteilhaften Weiterbildung bevorzugt, dass die Rotationsachse der ersten Fördertrommel und die Rotationsachse der zweiten Fördertrommel in einer senkrechten Ebene übereinander angeordnet sind. Vorzugsweise sind in einer Ausgestaltung die Rotationsachsen der ersten Fördertrommel und die Rotationsachse der zweiten Fördertrommel und auch die Rotationsachse der wenigstens einen weiteren Fördertrommel in einer (gemeinsamen) senkrechten Ebene übereinander angeordnet.

Außerdem zeichnet sich die Förderanordnung gemäß einem weiteren Aspekt dadurch aus, dass die erste Fördertrommel auf der Außenseite wenigstens einen, vorzugsweise starren, Ringkörper aufweist, wobei der wenigstens eine Ringkörper der ersten Fördertrommel in Umfangsrichtung der ersten Fördertrommel in regelmäßigen Abständen in einer Reihe hintereinander angeordnete Aufnahmemulden für die stabförmigen Artikel aufweist.

Im Rahmen der Erfindung ist es ebenfalls denkbar, dass die erste Fördertrommel zwei oder mehrere Ringkörper mit Aufnahmemulden aufweist, die entlang der Rotationsachse der Fördertrommel voneinander beabstandet sind.

Gemäß einer vorteilhaften Ausgestaltung weist die zweite Fördertrommel auf der Außenseite wenigstens einen, vorzugsweise starren, Ringkörper auf, wobei der wenigstens eine Ringkörper der zweiten Fördertrommel in Umfangsrichtung der zweiten Fördertrommel in regelmäßigen Abständen in einer Reihe hintereinander angeordnete Aufnahmemulden für die stabförmigen Artikel aufweist. Dabei kann es in einer Ausgestaltung weiterhin vorgesehen sein, dass die zweite Fördertrommel mit den ungeradzahligen Aufnahmemulden zwei Ringkörper mit in einer Reihe hintereinander angeordneten Aufnahmemulden jeweils aufweist.

Insbesondere wirken zur Förderung der stabförmigen Artikel der Ringkörper der ersten Fördertrommel und der Ringkörper der zweiten Fördertrommel miteinander zusammen, so dass die geförderten stabförmigen Artikel von den Aufnahmemulden des Ringkörpers der ersten Fördertrommel in die Aufnahmemulden des Ringkörpers der zweiten Fördertrommel übergeben werden oder übergebbar sind und nach Förderung der stabförmigen Artikel auf der zweiten Fördertrommel die stabförmigen Artikel von den Aufnahmemulden des Ringkörpers der zweiten Fördertrommel in die Aufnahmemulden des Ringkörpers der ersten Fördertrommel übergeben werden oder übergebbar sind, und dass bezogen auf die Rotationsachse der ersten Fördertrommel, und dass bezogen auf die Rotationsachse der ersten Fördertrommel oder bezogen auf die Rotationsachse der zweiten Fördertrommel der wenigstens eine Ringkörper der ersten Fördertrommel in axialer Richtung zu dem wenigstens einen Ringkörper der zweiten Fördertrommel versetzt ist.

Vorzugsweise ist bei einer Ausgestaltung vorgesehen, dass der Ringkörper der zweiten Fördertrommel eine kleinere Breite aufweist als der Ringkörper der ersten Fördertrommel. Hierbei ist die Breite der Ringkörper bezogen auf die Rotationsachse der jeweiligen Fördertrommel, so dass die Breite als axiale Breite der Ringkörper ausgebildet ist.

Darüber hinaus ist es bei der Förderanordnung vorteilhafterweise vorgesehen, dass an der ersten Fördertrommel wenigstens eine Prüfeinrichtung zur Prüfung der auf der ersten Fördertrommel geförderten stabförmigen Artikel vorgesehen ist und/oder an der zweiten Fördertrommel wenigstens eine Prüfeinrichtung zur Prüfung der auf der zweiten Fördertrommel geförderten stabförmigen Artikel vorgesehen ist und/oder an der wenigstens einen weiteren Fördertrommel wenigstens eine Prüfeinrichtung zur Prüfung der auf der wenigstens einen weiteren Fördertrommel geförderten stabförmigen Artikel vorgesehen ist.

Dabei ist es bei einer Weiterbildung vorzugsweise vorgesehen, dass entlang der Förderwege der stabförmigen Artikel auf der ersten Fördertrommel und auf der zweiten Fördertrommel und gegebenenfalls auf der wenigstens einen weiteren Fördertrommel die zu fördernden oder geförderten stabförmigen Artikel in längsaxialer Richtung in den Aufnahmemulden der Fördertrommeln nicht bewegt, insbesondere längsaxial verschoben, werden.

Vorzugsweise weisen die Aufnahmemulden der zweiten Fördertrommel jeweils mehrere, insbesondere zwei, Saugluftbohrungen auf, wobei die Saugluftbohrungen der Aufnahmemulden bezogen auf die Rotationsachse der zweiten Fördertrommel nebeneinander angeordnet sind, wobei über die Saugluftbohrungen die Aufnahmemulden jeweils mit Unterdruck beaufschlagbar sind, wobei bezogen auf die Förderrichtung der stabförmigen Artikel auf der zweiten Fördertrommel bei der Aufnahme von stabförmigen Artikeln im Übergabebereich von der ersten Fördertrommel mehrere oder alle Saugluftbohrungen der jeweiligen Artikel aufnehmenden Aufnahmemulde der zweiten Fördertrommel mit Unterdruck beaufschlagt sind oder werden und entlang des Förderwegs der stabförmigen Artikel auf der zweiten Fördertrommel bis zum Übergabebereich der stabförmigen Artikel, in dem die stabförmigen Artikel von der zweiten Fördertrommel an die erste Fördertrommel, insbesondere zurück, übergeben werden oder übergebbar sind, weniger Saugluftbohrungen oder nur eine Saugluftbohrung der jeweiligen Aufnahmemulde mit Unterdruck beaufschlagt sind oder ist. Dadurch wird während der Förderung der stabförmigen Artikel auf der zweiten Fördertrommel mit ungeradzahligen Aufnahmemulden nur an einer Saugluftbohrung der jeweiligen Aufnahmemulde Unterdruck angelegt, wobei während der Förderung der stabförmigen Artikel auf der zweiten Fördertrommel die zweite oder weitere Saugluftbohrungen nicht beaufschlagt sind. Hierdurch wird erreicht, dass an der zweiten Fördertrommel Saugluft eingespart wird. Nur bei der Aufnahme oder Übergabe von stabförmigen Artikeln von der ersten Fördertrommel in die Aufnahmemulden der zweiten Fördertrommel werden sämtliche Saugluftbohrungen der aufnehmenden Aufnahmemulde der zweiten Fördertrommel mit Unterdruck im Übergabebereich beaufschlagt, um eine sichere Aufnahme der stabförmigen Artikel an die zweite Fördertrommel zu gewährleisten. Anschließend wird der Unterdruck an den Aufnahmemulden bzw. an den Saugluftbohrungen der Aufnahmemulden der zweiten Fördertrommel bis auf vorzugsweise eine Saugluftbohrung abgeschaltet.

Gemäß einem weiteren bevorzugten Aspekt ist bei der Förderanordnung bevorzugt, dass die zweite Fördertrommel eine Muldenreinigungseinrichtung, insbesondere wenigstens ein oder mehrere Schaltventile, zum Reinigen der Aufnahmemulden aufweist, wobei insbesondere die Muldenreinigungseinrichtung derart eingerichtet ist, dass während der Förderung von stabförmigen Artikeln auf der zweiten Fördertrommel bei Rotation der Fördertrommel die mit stabförmigen Artikeln belegten Aufnahmemulden nicht gereinigt werden und die Aufnahmemulden, die mit stabförmigen Artikeln nicht belegt sind, gereinigt werden. Dadurch wird ein sicherer Betrieb der Förderanordnung erreicht.

Außerdem wird die Aufgabe gelöst durch eine Trommelmaschine der Tabak verarbeitenden Industrie, insbesondere Filteransetzmaschine oder Filterherstellungsmaschine oder Filterbereitstellungsmaschine, die mit einer voranstehend beschriebenen Fördertrommel, insbesondere nach einem der Ansprüche 1 bis 3, oder mit einer voranstehend beschriebenen Förderanordnung, insbesondere nach einem der Ansprüche 4 bis 11, ausgebildet ist.

Zur Vermeidung von Wiederholungen wird auf die voranstehenden Ausführungen ausdrücklich verwiesen.

Ferner wird die Aufgabe gelöst durch ein Verfahren zum queraxialen Fördern von stabförmigen Artikeln der Tabak verarbeitenden Industrie, insbesondere Filterzigaretten und/oder Filterstäbe und/oder Filterstabsegmente, unter Verwendung einer voranstehend beschriebenen Fördertrommel, insbesondere nach einem der Ansprüche 1 bis 3, oder unter Verwendung einer voranstehend beschriebenen Förderanordnung, insbesondere nach einem der Ansprüche 4 bis 11.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1a: eine Seitenansicht einer Förderanordnung zum queraxialen Fördern von stabförmigen Artikeln der Tabak verarbeitenden Industrie;
- Fig. 1b: schematisch vergrößerte Ausschnitte von Fördertrommeln der Förderanordnung gemäß Fig. 1a;
- Fig. 2: schematisch eine weitere Ansicht der Förderanordnung aus Fig. 1a;
- Fig. 3a: schematisch eine Ansicht eines Ringkörpers einer Fördertrommel der Förderanordnung im Ausschnitt;
- Fig. 3b: schematisch eine Ansicht eines Ringkörpers einer weiteren Fördertrommel der Förderanordnung im Ausschnitt;
- Fig. 4a, 4b: schematisch jeweils Querschnittsansichten der Förderanordnung aus Fig. 1a gemäß der Schnittlinien A-A bzw. B-B;
- Fig. 5a, 5b: eine vergrößerte Darstellung von zwei Fördertrommeln im Querschnitt gemäß den Darstellungen in Fig. 4a bzw. 4b;
- Fig. 6a, 6b: eine vergrößerte Darstellung von zwei Fördertrommeln im Querschnitt gemäß den Darstellungen in Fig. 4a bzw. 4b;
- Fig. 7a, 7b: eine vergrößerte Darstellung von zwei Fördertrommeln im Querschnitt gemäß den Darstellungen in Fig. 4a bzw. 4b;

Im Rahmen der Erfindung sind Merkmale, die mit "insbesondere" oder "vorzugsweise" gekennzeichnet sind, als fakultative Merkmale zu verstehen.

In den Zeichnungen sind jeweils gleiche oder gleichartige Elemente und/oder Teile mit denselben Bezugsziffern versehen, so dass von einer erneuten Vorstellung jeweils abgesehen wird.

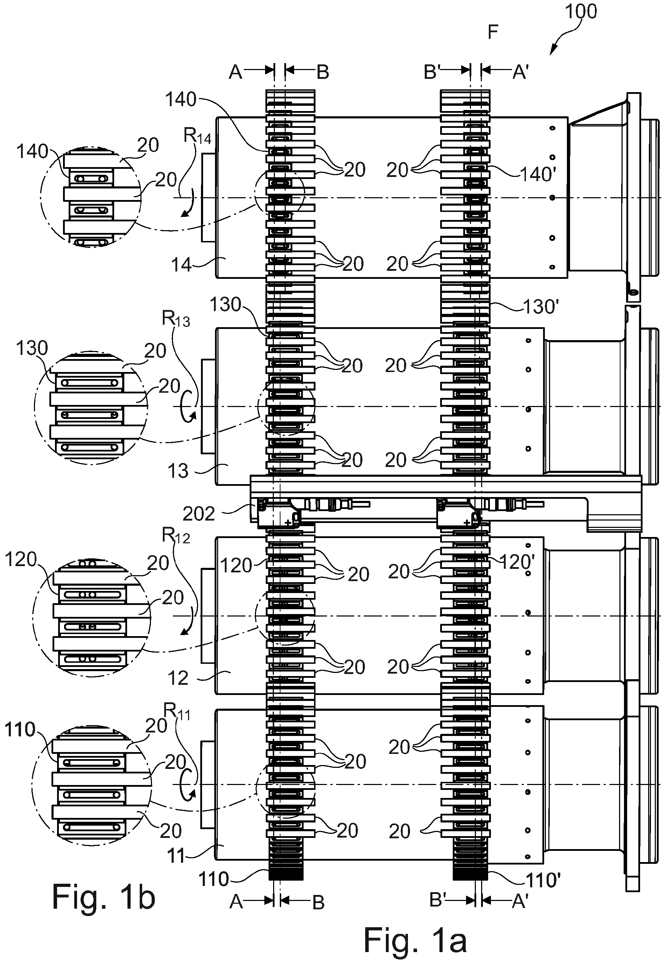

In Fig. 1a ist schematisch eine Seitenansicht einer Förderanordnung 100 gezeigt, die Bestandteil einer Filteransetzmaschine F oder einer anderen (Trommel-)Maschine der Tabak verarbeitenden Industrie sein kann bzw. ist. Die Förderanordnung 100 ist hierbei für die queraxiale Förderung von stabförmigen Artikeln 20, zum Beispiel Filterzigaretten oder dergleichen, vorgesehen.

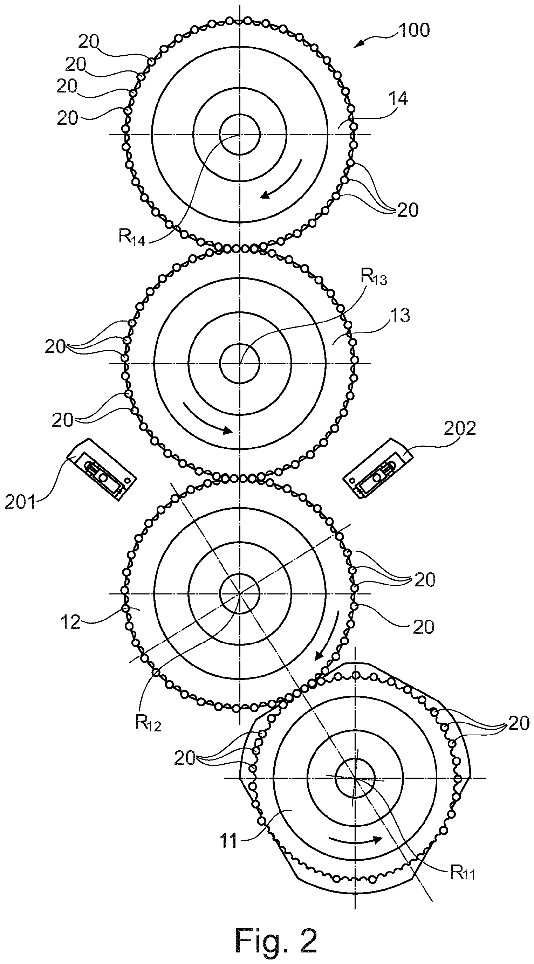

In Fig. 2 ist eine Ansicht der Förderanordnung 100 in einer schematischen Darstellung gezeigt. Die Förderanordnung 100 weist eine Fördertrommel 11 auf, die von einer stromaufwärtigen Fördertrommel stabförmige Artikel 20 empfängt und anschließend die stabförmigen Artikel 20 an eine nachfolgende Fördertrommel 12 übergibt. Von der Fördertrommel 12 werden die stabförmigen Artikel unter Rotation der Fördertrommel 12 zu einer nachfolgenden Fördertrommel 13 gefördert und an diese in die Aufnahmemulden der Fördertrommel 13 übergeben. Anschließend werden die stabförmigen Artikel 20 auf der Fördertrommel 13 an eine als Umkehrtrommel ausgebildete Fördertrommel 14 übergeben, wobei die Fördertrommel 14 eine ungerade Anzahl an Aufnahmemulden für die stabförmigen Artikel 20 aufweist.

Unter Rotation der von der Fördertrommel 13 aufgenommenen stabförmigen Artikel 20 werden die stabförmigen Artikel 20 auf der Fördertrommel 14 gefördert und zurück an die Aufnahmemulden der Fördertrommel 13 übergeben. Hierzu weist die Fördertrommel 13 eine geradzahlige Anzahl an Aufnahmemulden auf. Auch die anderen Fördertrommeln 11 und 12 weisen jeweils eine geradzahlige Anzahl an Aufnahmemulden auf. Die von der Fördertrommel 14 geförderten stabförmigen Artikel 20 werden an die Fördertrommel 13 (zurück) übergeben, wobei anschließend die stabförmigen Artikel 20 von der Fördertrommel 13 an die nachfolgenden Fördertrommeln 12 und 11 jeweils übergeben werden.

Die Fördertrommeln 11, 12, 13, 14 weisen jeweils einen Trommelkörper auf, auf dem in Umfangsrichtung zwei voneinander beabstandete Ringkörper 110, 110`, 120, 120`, 130, 130` und 140, 140' angeordnet sind. Die Ringkörper 110, 110', 120, 120`, 130, 130' und 140, 140' auf den jeweiligen Fördertrommeln 11, 12, 13, 14 bezogen auf die jeweilige Rotationsachse der Fördertrommel sind axial voneinander beabstandet. Auf der Außenseite sind die Ringkörper 110, 110`, 120, 120`, 130, 130` und 140, 140' jeweils mit Aufnahmemulden für die stabförmigen Artikel 20 ausgebildet.

In Fig. 1b sind jeweils vergrößerte Darstellungen der Ringkörper 110, 120, 130 und 140 gemäß den mit Markierungen versehenen Bereichen der entsprechenden Trommelkörper 110, 120, 130 und 140 gezeigt. Die anderen Ringkörper 110`, 120`, 130` und 140' sind jeweils (spiegel-) symmetrisch zu den anderen Ringkörpern 110, 120, 130, und 140 auf den Fördertrommeln 11, 12, 13, 14 angeordnet.

Nachfolgend werden anhand der Ringkörper 110, 120, 130 und 140 der Trommelkörper 11, 12, 14, 15 wesentliche Merkmale der Erfindung dargestellt, wobei diese Ausführungen auch in entsprechender Weise für die anderen Ringkörper 110`, 120', 130` und 140' jeweils gelten.

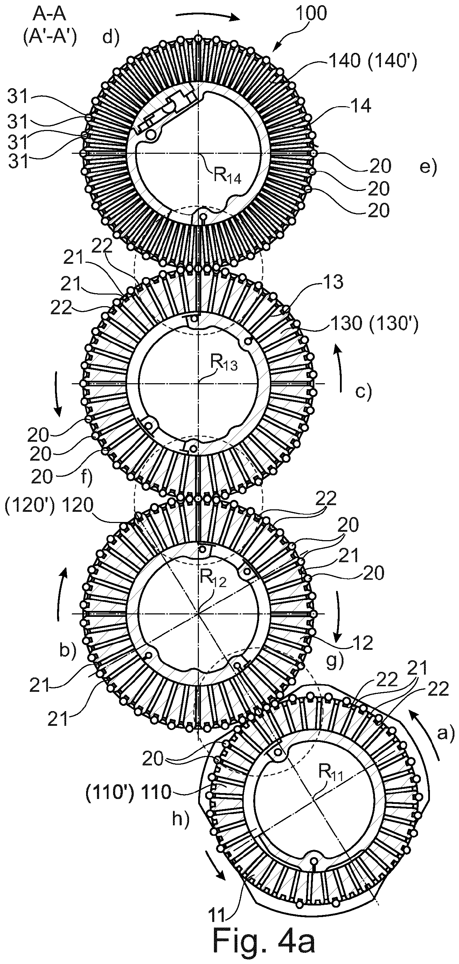

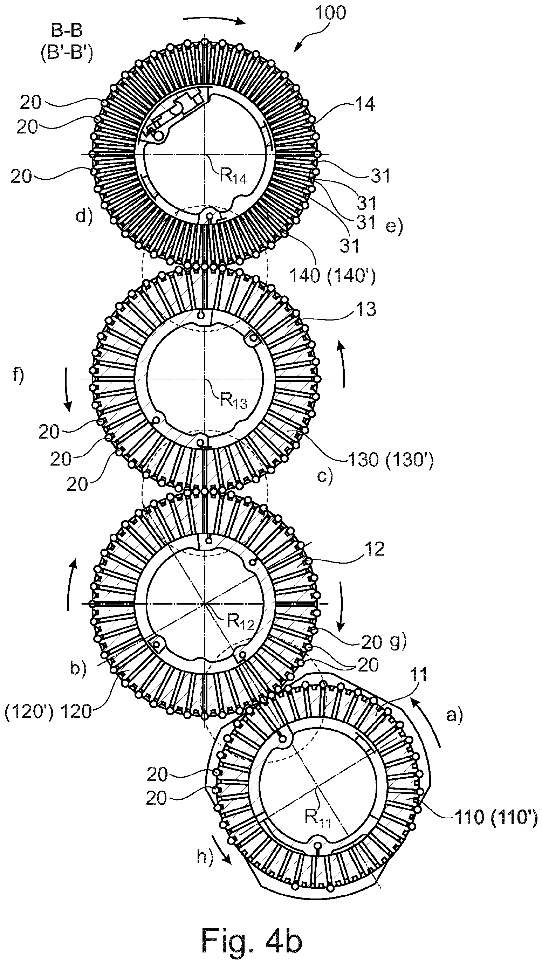

In Fig. 4a, 4b sind jeweils Querschnittsansichten gemäß den Schnitten A-A und B-B aus Fig. 1a dargestellt. Die gleichen Querschnittsansichten werden auch erhalten gemäß den in Fig. 1a eingezeichneten Schnittlinien A'-A' und B'-B'. Somit entspricht ein Schnitt gemäß der Schnittlinie A-A der Schnittlinie A'-A'. Gleiches gilt auch für die Schnittlinie B-B, die gemäß der Schnittlinie B'-B' zu der gleichen Querschnittsansicht führen würde.

An der Förderanordnung 100 sind seitlich oberhalb der Fördertrommel 12 (vgl. Fig. 2) Prüfeinrichtungen 201, 202 angeordnet, um die auf der Fördertrommel 12 geförderten stabförmigen Artikel 20 zu prüfen. Hierbei werden die von der Fördertrommel 11 zur Fördertrommel 13 geförderten stabförmigen Artikel 20 mittels der Prüfeinrichtung 201 geprüft, während die von der Fördertrommel 13 zur Fördertrommel 11 geförderten stabförmigen Artikel 20 mittels der Prüfeinrichtung 202 geprüft werden. Beispielsweise sind die Prüfeinrichtungen 201, 202 als Lichttaster oder dergleichen ausgebildet, um die stabförmigen Artikel 20 zu untersuchen bzw. zu prüfen. In einer hier nicht dargestellten Ausgestaltung sind im Bereich der freien Kopfenden der stabförmigen Artikel 20 auf den Fördertrommeln 12 oder 13 oder 14, die über die Aufnahmemulden 21, 22 bzw. 31 der Fördertrommel 12, 13 oder 14 seitlich hinausragen, weitere Prüfeinrichtungen angeordnet, um die (freien) Enden der stabförmigen Artikel 21 jeweils zu untersuchen und zu prüfen. Hierbei können für die stabförmigen Artikel 20 bzw. für eine Reihe von stabförmigen Artikeln 20 eine oder mehrere Prüfeinrichtungen an einer Fördertrommel vorgesehen sein. Ebenso ist es in einer weiteren Ausgestaltung denkbar, dass mehrere Prüfeinrichtungen für eine Reihe von queraxial hinter einander angeordneten und geförderten stabförmigen Artikeln 20, die auf den Fördertrommeln 12, 13 und 14 gefördert werden, an mehreren Fördertrommeln angeordnet oder vorgesehen sind.

Dadurch, dass die stabförmigen Artikel 20 von der Fördertrommel 11 zur Fördertrommel 14 gefördert werden und die stabförmigen Artikel 20 anschließend von der als Umkehrtrommel ausgebildeten Fördertrommel 14 zur Fördertrommel 11 zurückgefördert werden, ist es möglich, dass die stabförmigen Artikel 20 vollständig in ihrem Umfang mittels der beiden Prüfeinrichtungen 201, 202 erfasst werden, da mittels einer Prüfeinrichtung 201 bzw. 202 jeweils eine sichtbare Hälfte der stabförmigen Artikel 20 während ihrer Förderung auf der Fördertrommel 12 untersucht wird.

Wie aus Fig. 2 hervorgeht, sind die Rotationsachse R₁₂ der Fördertrommel 12, die Rotationsachse R₁₃ der Fördertrommel 13 und die Rotationsachse R₁₄ der Fördertrommel 14 in einer senkrechten Ebene übereinander, so dass die stabförmigen Artikel 20 bei Förderung mittels der Fördertrommel 12, 13, 14 bezogen auf die vertikale Höhe nach oben und nach unten gefördert werden. Während der Förderung wird hierbei eine Prüfung, zum Beispiel eine optische Prüfung, mittels der Prüfeinrichtungen 201, 202 durchgeführt. Insgesamt ergibt sich aufgrund der Anordnung der Fördertrommeln 12, 13, 14 übereinander, wobei die Rotationsachsen R₁₂, R₁₃ und R₁₄ der Fördertrommeln 12, 13, 14 in einer vertikalen Ebene sind, eine platzsparende Anordnung der Fördertrommeln 12, 13, 14.

Darüber hinaus ist es im Rahmen der Erfindung denkbar, dass beispielsweise auf die Fördertrommel 13 zwischen der Fördertrommel 12 und der Fördertrommel 14 verzichtet wird, so dass oberhalb der Fördertrommel 12 die Umkehrtrommel 14 angeordnet ist. In diesem Fall würde sich die Rotationsrichtung der als Umkehrtrommel ausgebildeten Fördertrommel 14 mit der ungeraden Anzahl an Fördermulden ändern.

Wie aus Fig. 1b hervorgeht, sind die Ringkörper 110, 120, 130 der Fördertrommeln 12, 13, 14 mit Aufnahmemulden für die stabförmigen Artikel 20 ausgebildet, wobei die stabförmigen Artikel 20 nur in jeder zweiten Mulde angeordnet werden. Auch die von der Fördertrommel 14 geförderten stabförmigen Artikel 20 sind auf dem Ringkörper 140 so angeordnet, dass in jeder zweiten Mulde stabförmige Artikel 20 gefördert werden, d.h. zwischen zwei, jeweils in Aufnahmemulden angeordneten stabförmigen Artikeln 20 ist jeweils eine Aufnahmemulde nicht besetzt.

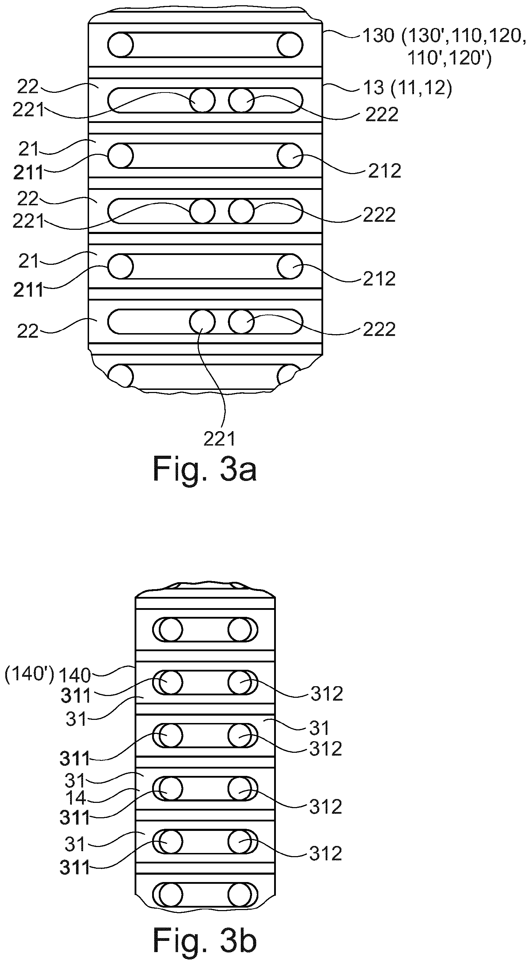

In Fig. 3a ist schematisch ein Ringkörper 130 der Fördertrommel 13 im Ausschnitt dargestellt. Die zu dem Ringkörper 130 gemachten Aussagen gelten auch in entsprechender Weise für die Ringkörper 130`, 110, 120, 110', 120' der Fördertrommeln 11, 12, 13.

Der Ringkörper 130 weist auf seiner Außenseite in regelmäßigen Abständen angeordnete Aufnahmemulden 21, 22 für die stabförmigen Artikel 20 auf. Die Aufnahmemulden 21, 22 sind alternierend in queraxialer Richtung in einer Reihe hintereinander angeordnet. Die Aufnahmemulden 21 weisen zwei in axialer Richtung voneinander beabstandete Saugluftbohrungen 211, 212 auf, die jeweils am Rand der Aufnahmemulden 21 ausgebildet sind. Die jeweils zwischen den Aufnahmemulden 21 vorgesehenen Aufnahmemulden 22 weisen ebenfalls zwei Saugluftbohrungen 221, 222 auf, die einen geringeren Abstand in axialer Richtung aufweisen und im mittleren Bereich der jeweiligen Aufnahmemulde 22 angeordnet sind. Hierbei sind in der Projektion bezogen auf die Umfangsrichtung der jeweiligen Fördertrommel 11, 12, 13 die Saugluftbohrungen 221, 222 der Aufnahmemulden 22 von den Saugluftbohrungen 211, 212 der Aufnahmemulden 21 voneinander in axialer Richtung beabstandet. Das heißt, dass die Positionen der Saugluftbohrungen 211, 212 der Aufnahmemulden 21 (der ersten Art) und die Position der Saugluftbohrungen 221, 222 der Aufnahmemulden 22 (der zweiten Art) in Umfangsrichtung der jeweiligen Fördertrommeln 11, 12, 13, 14 unterschiedlich sind.

Bei der Förderung der stabförmigen Artikel 20 von der Fördertrommel 11 über die Fördertrommeln 12 und 13 zur Fördertrommel 14 werden die stabförmigen Artikel 20 jeweils in den Aufnahmemulden 21 der Ringkörper 110, 120, 130 bzw. 110`, 120` und 130' angeordnet (vgl. Fig. 1a, Fig. 5a bis 7b). Nach der Aufnahme der stabförmigen Artikel 20 in die Aufnahmemulden 31 der Fördertrommel 14 werden die von der Fördertrommel 14 an die Fördertrommel 13 zurückübergebenen stabförmigen Artikel 20 in den Aufnahmemulden 22 der Ringkörper 130, 120, 110 der jeweiligen Fördertrommeln 13, 12, 11 angeordnet. Mit anderen Worten: Während der Förderung der stabförmigen Artikel 20 zur Fördertrommel 14 werden entlang des Förderwegs der stabförmigen Artikel 20 die Saugluftbohrungen 211, 212 der jeweiligen Aufnahmemulden 21 der Ringkörper 110, 120, 130 bzw. 110', 120` und 130`, in denen die stabförmigen Artikel 20 angeordnet sind, mit Unterdruck beaufschlagt, während die dazwischen vorhandenen Aufnahmemulden 22 nicht mit jeweils einem stabförmigen Artikel 20 belegt sind, wobei außerdem die Saugluftbohrungen 221, 222 der Aufnahmemulden 22 der zweiten Art nicht mit Unterdruck beaufschlagt sind.

Werden die stabförmigen Artikel 20 von der Fördertrommel 14 zurück zur Fördertrommel 11 gefördert, so werden die stabförmigen Artikel 20 von der Fördertrommel 14 in die Aufnahmemulden 22 des Ringkörpers 130 der Fördertrommel 13 übergeben, während in den dazwischen angeordneten Aufnahmemulden 21 keine stabförmigen Artikel 20 eingelegt bzw. übergeben werden. Anschließend werden von der Fördertrommel 13 die stabförmigen Artikel 20, die zur Fördertrommel 11 zurückgefördert werden, aus den Aufnahmemulden 22 des Ringkörpers 130 in die Aufnahmemulden 22 der Ringkörper 120 bzw. 110 übergeben.

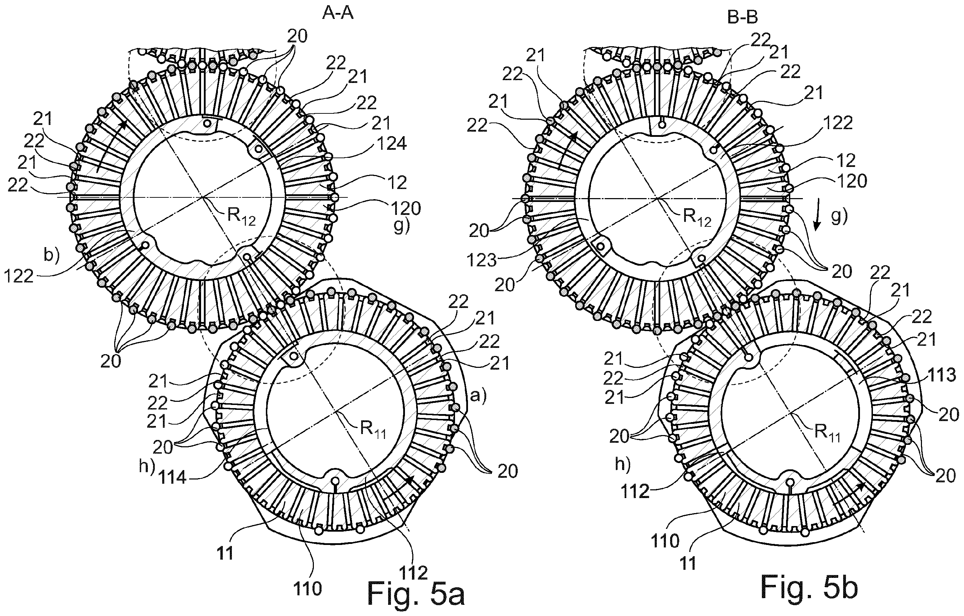

Während der Förderung der stabförmigen Artikel 20 von der Fördertrommel 14 zur Fördertrommel 11 werden hierbei die in den Aufnahmemulden 22 der Ringkörper 130, 120, 110 bzw. 130`, 120` und 110`jeweils abgelegten bzw. angeordneten stabförmigen Artikel 20 mittels Unterdruck, der an den Saugluftbohrungen 221, 222 der Aufnahmemulden 22 (der zweiten Art) anliegt, beaufschlagt, während die Saugluftbohrungen 211, 212 der Aufnahmemulden 21 (der ersten Art) für den Rücktransport der stabförmigen Artikel 20 nicht mit Unterdruck beaufschlagt sind (vgl. Fig. 5a bis 7b). Mittels eines jeweiligen Steuerkörpers im Inneren der jeweiligen Fördertrommel 11, 12, 13, 14 wird der Unterdruck an den entsprechenden Aufnahmemulden 21 der Ringkörper 130, 120, 110 bzw. 130', 120` und 110' bzw. an deren Saugluftbohrungen 211, 212 abgeschaltet.

In Fig. 3b ist schematisch eine Ansicht des Ringkörpers 140 der als Umkehrtrommel ausgebildeten Fördertrommel 14 dargestellt. Der Ringkörper 140 der Fördertrommel 14 ist baugleich zu dem Ringkörper 140' der Fördertrommel 14 (vgl. Fig. 1a). Der Ringkörper 140 weist in Umfangsrichtung Aufnahmemulden 31 auf, die in äquidistanten Abständen in Umfangsrichtung angeordnet sind. Jede Aufnahmemulde 31 weist voneinander beabstandete Saugluftbohrungen 311, 312 auf, die in Umfangsrichtung hintereinander angeordnet sind. Der Ringkörper 140 bzw. die Fördertrommel 14 weisen in Umfangsrichtung zum queraxialen Transport der stabförmigen Artikel 20 in den Aufnahmemulden 31 eine ungerade Anzahl von Aufnahmemulden 31 auf.

Die Breite der Aufnahmemulden 31 des Ringkörpers 140 ist kleiner als die Breite der Ringkörpers 130, 130' der Fördertrommel 13 bzw. der anderen Ringkörper 110, 120, 110`, 120`, 130` der Fördertrommeln 11, 12. Während der queraxialen Förderung der stabförmigen Artikel 20 mittels der Förderanordnung 100 sind die Längen der stabförmigen Artikel 20 größer als oder gleich der Breite der Ringkörper 110, 120, 130, 140 bzw. 110`, 120`, 130`, 140` der Fördertrommeln 11, 12, 13 und 14 der Förderanordnung 100 (vgl. Fig. 2). Die stabförmigen Artikel 20 werden in den Aufnahmemulden 21, 22 der Fördertrommeln 11, 12, 13 vorzugsweise einseitig angeordnet, so dass mindestens ein (freies) Ende der stabförmigen Artikel 20 über ein seitliches Ende der Aufnahmemulden 21, 22 der Fördertrommeln 11, 12, 13 hinausragt. Auch in den Aufnahmemulden 31 der Fördertrommel 14 sind die stabförmigen Artikel 20 während ihrer queraxialen Förderung auf der Fördertrommel 14 einseitig gehalten bzw. angeordnet, so dass mindestens ein (freies) Ende der stabförmigen Artikel 20 über ein seitliches Ende der Aufnahmemulden 31 der Fördertrommeln 14 hinausragt.

Bei der Aufnahme von stabförmigen Artikeln 20 von der Fördertrommel 13 in die Aufnahmemulden 31 der Fördertrommel 14 sind bei der Übergabe der stabförmigen Artikel 20 die beiden Saugluftbohrungen 311, 312 der Aufnahmemulden 31 mit Unterdruck beaufschlagt. Nach der Aufnahme wird während der Förderung der stabförmigen Artikel 20 in den Aufnahmemulden 31 an einer der Saugluftbohrungen 311, 312 Unterdruck abgeschaltet, so dass der in der jeweiligen Aufnahmemulde 31 angeordnete stabförmige Artikel 20 über eine Saugluftbohrung der jeweiligen Aufnahmemulde 31 mit Unterdruck beaufschlagt und dadurch während ihrer Förderung gehalten wird. Bei der Übergabe der stabförmigen Artikel 20 von der Fördertrommel 14 an die Fördertrommel 13 werden die von der Fördertrommel 14 an die Fördertrommel 13 übergebenen stabförmigen Artikel 20 mit einem Bewegungsstoß an die den stabförmigen Artikel 20 aufnehmenden Aufnahmemulden 22 der Fördertrommel 13 beaufschlagt, wodurch eine sichere Übergabe der stabförmigen Artikel 20 von der Fördertrommel 14 an die in Förderrichtung der Artikel nachfolgende Fördertrommel 13 gewährleistet wird. Hierbei werden vorzugsweise die beiden Saugluftbohrungen 311, 312 mit Überdruck zum Übergabezeitpunkt der stabförmigen Artikel 20 beaufschlagt.

Da bei dem Transport der stabförmigen Artikel 20 von der Fördertrommel 11 über die weiteren Fördertrommeln 12 und 13 in den Aufnahmemulden 21 (der ersten Art) der Fördertrommeln 11, 12, 13 jede zweite Aufnahmemulde der Ringkörper 110, 120, 130 bzw. 110`, 120', 130` entlang des Förderwegs der stabförmigen Artikel 20 belegt ist, so werden bei der Übergabe der stabförmigen Artikel 20 von der an der Fördertrommel 14 angeordneten Fördertrommel 13 die stabförmigen Artikel 20 in jede zweite Aufnahmemulde 31 des Ringkörpers 140, 140' der Fördertrommel 14 übergeben. Mit anderen Worten: Während der Förderung der stabförmigen Artikel 20 auf der Fördertrommel 14 ist zwischen zwei in den Aufnahmemulden 31 geförderten stabförmigen Artikel 20 eine Aufnahmemulde 31 jeweils nicht belegt bzw. frei, wobei während des Förderwegs der stabförmigen Artikel 20 auf der Fördertrommel 14 an mindestens einer Saugluftbohrung 311, 312 der Aufnahmemulden 31 des Ringkörpers 140, 140' Unterdruck an der nicht belegten Aufnahmemulde anliegt. Insbesondere liegt nur an einer Saugluftbohrung 311 oder 312 der Aufnahmemulden 31 der jeweils nicht belegten Aufnahmemulde des Ringkörpers 140 Unterdruck an, während an der anderen, belegten Saugluftbohrung 311 oder 312 der Unterdruck mittels eines Steuerkörpers im Inneren der Fördertrommel 14 abgeschaltet ist.

In den Fig. 4a, 4b sind jeweils Querschnitte durch die Fördertrommeln 11, 12, 13, 14 gemäß den Schnittlinien A-A und B-B in Fig. 1a schematisch dargestellt. Diese Schnittlinien entsprechen auch den in Fig. 1a dargestellten Schnittlinien A'-A' bzw. B'-B'. In den Fig. 5a, 5b, 6a, 6b und 7a, 7b sind jeweils vergrößerte Darstellungen der in den Fig. 4a, 4b dargestellten Fördertrommeln 11, 12, 13, 14 gezeigt. Nachfolgend wird anhand der genannten Zeichnungen die Funktionsweise der Förderanordnung 100 erläutert.

In den Fig. 5a, 5b, 6a, 6b, 7a und 7b sind zur Verdeutlichung des Förderprozesses für die stabförmigen Artikel 20 auf den Fördertrommeln 11, 12, 13, 14 die von den Fördertrommeln 11, 12, 13, 14 geförderten stabförmigen Artikel 20, die von der Fördertrommel 11 zu der Fördertrommel 14 gemäß den Verfahrensschritten a) bis d) in den Figuren gefördert werden, durch eine schwarze Markierung des Durchmessers hervorgehoben, während die von der Fördertrommel 14 zu der Fördertrommel 11 zurückgeförderten stabförmigen Artikel 20 im Querschnitt weiß markiert sind gemäß den Verfahrensschritten a) bis d).

Bei der Übergabe von stabförmigen Artikeln 20 von einer (in den Figuren nicht dargestellten) Fördertrommel an die Fördertrommel 11 werden die stabförmigen Artikel 20 in den Aufnahmemulden 21 der ersten Art des Ringkörpers 110 aufgenommen und angeordnet (vgl. Fig. 5a, 5b). Um die stabförmigen Artikel 20 in den Aufnahmemulden 21 des Ringkörpers 110 zu halten, in dem die Aufnahmemulden 21 mit Unterdruck beaufschlagt sind, ist im Inneren des Trommelkörpers bzw. des Ringköpers 110 ein Steuerflansch 112 vorgesehen (Verfahrensschritt a)).

Im Förderbereich der stabförmigen Artikel 20 zum Übergabebereich zwischen der Fördertrommel 11 und der Fördertrommel 12 ist der Steuerflansch 112 mit einer Durchbrechung 113 (vgl. Fig. 5b) ausgebildet, so dass die Saugluftbohrungen 211, 212 der Aufnahmemulden 21 des Ringkörpers 110 (vgl. Fig. 3a) mit Unterdruck beaufschlagt sind. Die in diesem Förderbereich nicht-belegten Aufnahmemulden 22 der zweiten Art sind nicht mit Unterdruck beaufschlagt, so dass die Saugluftbohrungen der Aufnahmemulden 22 mittels des Steuerkörpers 112 im Förderbereich der stabförmigen Artikel 20 in Richtung des Übergabebereichs zwischen der Fördertrommel 11 und der Fördertrommel 12 geschlossen sind, wodurch die Saugluftbohrungen 211, 221 der Aufnahmemulden 22 (vgl. Fig. 3a) nicht mit Unterdruck beaufschlagt sind (vgl. Fig. 5b, Verfahrensschritt a)).

Im Übergabebereich zwischen der Fördertrommel 11 und der Fördertrommel 12 wird der Unterdruck in den Aufnahmemulden 21 des Ringkörpers 110 mittels des Steuerkörpers 112 abgeschaltet (vgl. Fig. 5b), so dass die stabförmigen Artikel 20 jeweils von einer Aufnahmemulde 21 des Ringkörpers 110 der Fördertrommel 11 an eine Aufnahmemulde 21 der ersten Art des Ringkörpers 120 abgegeben werden, um die Saugluftbohrungen 211, 212 der Aufnahmemulden 21 des Ringkörpers 120 mit Unterdruck zu beaufschlagen (vgl. Verfahrensschritt b). Ferner weist ein im Inneren der Fördertrommel 12 vorgesehener Steuerkörper 122 eine Durchbrechung 123 auf, um die Saugluftbohrungen 211, 212 in den Aufnahmemulden 21 des Ringkörpers 120, in denen die stabförmigen Artikel aufgenommen werden oder sind, mit Unterdruck zu beaufschlagen.

Der Steuerkörper 122 ist im Bereich der Saugluftbohrungen 221, 221 der Aufnahmemulden 22, die während der Förderung der stabförmigen Artikel 20 von der Fördertrommel 11 zur nachfolgenden Fördertrommel 13 nicht belegt sind, geschlossen ausgebildet (vgl. Fig. 5a, Verfahrensschritt b)).

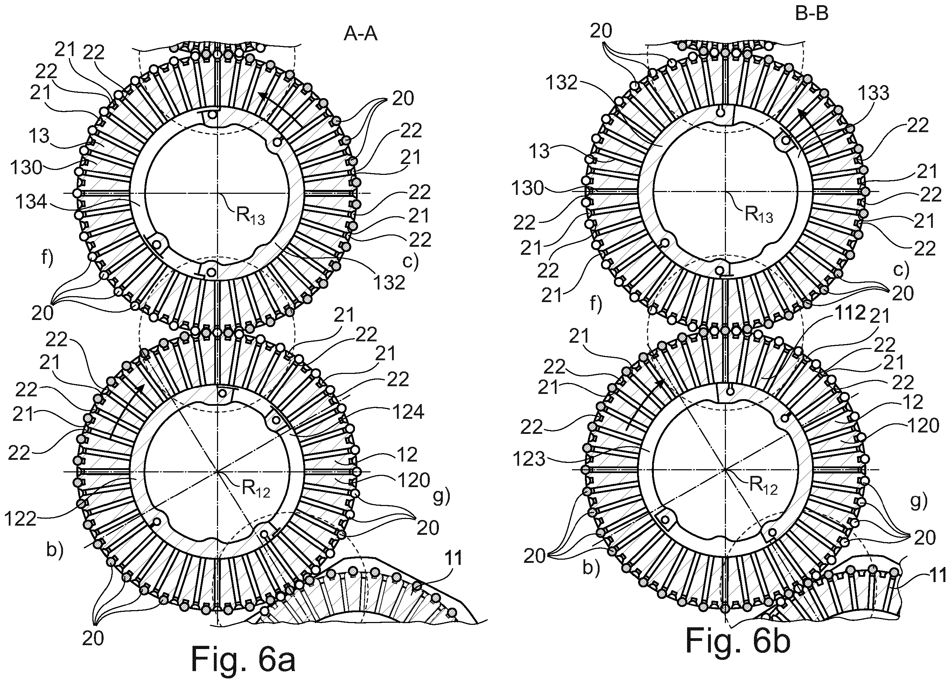

Nachfolgend werden die in den Aufnahmemulden 21 des Ringkörpers 120 gehaltenen stabförmigen Artikel 20 von der Fördertrommel 12 an Aufnahmemulden 21 des Ringkörpers 130 der Fördertrommel 13 übergeben (vgl. Fig. 6a, 6b). Bei der Übergabe der stabförmigen Artikel 20 wird der Unterdruck in den Saugluftbohrungen 211, 212 der Aufnahmemulden 21 des Ringkörpers 122 mittels des Steuerkörpers 122 abgeschaltet (vgl. Verfahrensschritt b)), wobei gleichzeitig an den Saugluftbohrungen 211, 212 der Aufnahmemulden 21 des Ringkörpers 130 der Fördertrommel 13 Unterdruck angelegt wird (vgl. Verfahrensschritt c)). Hierzu ist im Inneren der Fördertrommel 13 ein Steuerkörper 132 vorgesehen, der im Bereich der Saugluftbohrungen 211, 212 der Aufnahmemulden 21 des Ringkörpers 130 eine entsprechende Durchbrechung 133 (vgl. Fig. 6b) aufweist. Außerdem ist der Steuerkörper 132 der Fördertrommel 13 derart ausgebildet, dass im Bereich der Saugluftbohrungen 221, 222 der Aufnahmemulden 22 (der zweiten Art) des Ringkörpers 130 kein Unterdruck an den Saugluftbohrungen 221, 222 anliegt (vgl. Fig. 6a, Verfahrensschritt c)).

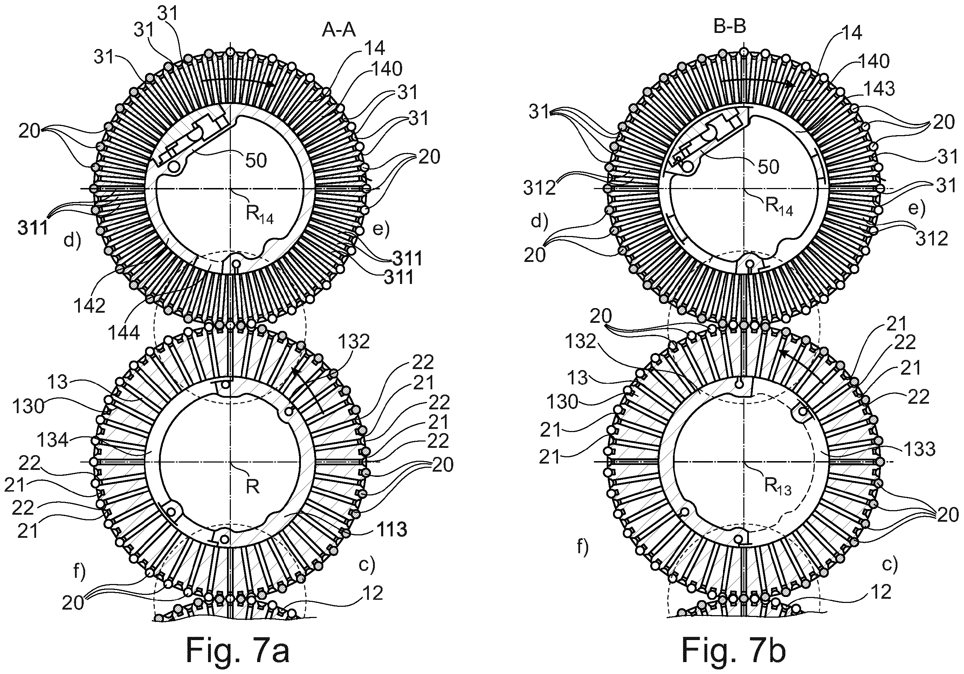

Mittels des über die Durchbrechung 133 anliegenden Unterdrucks an den Saugluftbohrungen 211, 212 der Aufnahmemulden 21 der Fördertrommel 13 werden unter Rotation des Ringkörpers 130 die stabförmigen Artikel 20 in den Übergabebereich zur als Umkehrtrommel ausgebildeten Fördertrommel 14 gefördert (vgl. Fig. 7a, 7b). Von der Fördertrommel 13 werden die stabförmigen Artikel 20 anschließend in die Aufnahmemulden 31 des Ringkörpers 140 der Fördertrommel 14 übergeben (vgl. Fig. 7a, 7b, Verfahrensschritt d)).

Im Inneren der Fördertrommel 14 ist ein Steuerkörper 142 angeordnet, wobei der Steuerkörper 142 eine Durchbrechung 143 aufweist, so dass jeweils die Saugluftbohrungen 312 der Aufnahmemulden 31 während des Umlaufs der stabförmigen Artikel 20 auf der Fördertrommel 14 mit Unterdruck beaufschlagt sind (vgl. Fig. 7a). Hierdurch werden die von der Fördertrommel 13 abgegebenen stabförmigen Artikel 20 in den Aufnahmemulden 31 gehalten (vgl. Fig. 7b). Während der Förderung der stabförmigen Artikel 20 auf der Fördertrommel 14 ist die andere Saugluftbohrung 311 mittels des Steuerkörpers 142 geschlossen, so dass an den Saugluftbohrungen 311 der Aufnahmemulden 31 kein Vakuum bzw. Unterdruck anliegt (vgl. Fig. 7a). Um eine sichere Übergabe der stabförmigen Artikel 20 von der Fördertrommel 13 an die Aufnahmemulden 31 der Fördertrommel 14 zu gewährleisten, ist im Übergabebereich im Steuerkörper 142 eine Durchbrechung 144, um die Saugluftbohrungen 311 der Aufnahmemulden 31 neben den Saugluftbohrungen 312 der Aufnahmemulden 31 mit Unterdruck zu beaufschlagen (vgl. Fig. 7a), wodurch eine sichere Aufnahme der stabförmigen Artikel 20 gewährleistet wird.

Während der Förderung der stabförmigen Artikel 20 auf dem Ringkörper 140 der Fördertrommel 14 werden die von stabförmigen Artikeln 20 nicht belegten Aufnahmemulden 31 mittels einer im Inneren der Fördertrommel 14 vorgesehenen Reinigungseinrichtung 50 gereinigt. Die Reinigungseinrichtung 50 ist hierbei mittels eines Schaltventils, insbesondere eines Schnellschaltventils, ausgebildet, so dass die nicht belegten Aufnahmemulden 31 geschaltet sauber geblasen werden. Hierbei wird die Reinigungseinrichtung 50 insbesondere getaktet betrieben, so dass unter Rotation des Ringkörpers 140 die Saugluftbohrungen 311, 312 der Aufnahmemulden 31 durch Beaufschlagung mit einem Luftstoß gereinigt werden. Die mit stabförmigen Artikeln 20 belegten Aufnahmemulden 31 werden hierbei nicht mit einem Luftstoß beaufschlagt, so dass beim Vorbeiführen der Saugluftbohrungen 311, 312 an der Reinigungseinrichtung 50 nur die Saugluftbohrungen 311, 312, in denen die stabförmigen Artikel 20 aufgenommen sind, gereinigt werden.

Der Ringkörper 140 der Fördertrommel 14 weist in Umfangsrichtung eine ungeradzahlige Anzahl an Aufnahmemulden 31 auf, so dass bei der Rückführung der stabförmigen Artikel 20 im Verfahrensschritt e) die stabförmigen Artikel 20 an eine nicht-belegte Aufnahmemulde 22 des Ringkörpers 130 der Fördertrommel 13 abgegeben werden (vgl. Fig. 7a), während gleichzeitig in eine nicht-belegte Aufnahmemulde 31 des Ringkörpers 140 der Fördertrommel 14 ein stabförmiger Artikel 20 von der Aufnahmemulde 21 des Ringkörpers 130 aufgenommen wird (vgl. Fig. 7b). Anschließend werden die stabförmigen Artikel 20 auf der Fördertrommel 13 gemäß Verfahrensschritt f) gefördert, wobei während der Förderung der stabförmigen Artikel 20 Unterdruck an den Aufnahmemulden 22 über eine Durchbrechung 134 des Ringkörpers 130 anliegt (vgl. Fig. 7a), während mittels des Steuerkörpers 132 der Unterdruck an den Saugluftbohrungen 211, 212 der Aufnahmemulden 21 abgeschaltet ist (vgl. Fig. 6b, 7b).

Bei der anschließenden Übergabe der stabförmigen Artikel 20 (vgl. Fig. 6a, 6b) von der Fördertrommel 13 an die Fördertrommel 12 wird das Haltevakuum an den Aufnahmemulden 22 des Ringkörpers 130 mittels des Steuerkörpers 132 abgeschaltet (vgl. Verfahrensschritt f), so dass im Anschluss daran die stabförmigen Artikel 20 in die freien Aufnahmemulden 22 des Ringkörpers 120 der Fördertrommel 12 übergeben werden (vgl. Fig. 6a, Verfahrensschritt g), wobei nach der Übergabe der stabförmigen Artikel 20 in die Aufnahmemulden 22 des Ringkörpers 120 mittels einer Durchbrechung 124 im Steuerkörper 122 (vgl. Fig. 6a) Unterdruck an den Saugluftbohrungen 22 anliegt, während mittels des Steuerkörpers 122 der Unterdruck an den Saugluftbohrungen für die Aufnahmemulden 21 des Steuerkörpers 120 abgeschaltet ist (vgl. Fig. 6b, Verfahrensschritt g)). Anschließend werden die stabförmigen Artikel 20 gemäß dem Verfahrensschritt g) in den Übergabebereich zu der Fördertrommel 11 gefördert, wobei der in den Aufnahmemulden 22 der Fördertrommel 12 anliegende Unterdruck mittels des Steuerkörpers 122 an der Fördertrommel 12 abgeschaltet wird, so dass die stabförmigen Artikel 20 aus den Aufnahmemulden 22 der Fördertrommel 12 in die Aufnahmemulden 22 des Ringkörpers 110 der Fördertrommel 11 übergeben werden (vgl. Fig. 5a, 5b). Bei der Übergabe wird der Unterdruck in den Saugluftbohrungen für die Aufnahmemulden 22 mittels des Steuerkörpers 122 an der Fördertrommel 12 abgeschaltet, so dass die zu übergebenden stabförmigen Artikel 20 in die freien Aufnahmemulden 22 des Ringkörpers 110 der Fördertrommel 11 übergeben werden.

Um die stabförmigen Artikel 10 im Verfahrensschritt h) in den Aufnahmemulden 22 des Ringkörpers 110 zu halten, weist der Steuerkörper 112 der Fördertrommel 11 eine Durchbrechung 114 auf, während mittels des Steuerkörpers 112 in diesem Förderbereich die Aufnahmemulden 21, die nicht mit stabförmigen Artikeln 20 belegt sind, nicht mit Unterdruck beaufschlagt sind (vgl. Fig. 5b).

Im Anschluss an den Verfahrensschritt h) werden die stabförmigen Artikel 20 von der Fördertrommel 11 an eine nachfolgende (nicht dargestellte) Fördertrommel in entsprechender Weise übergeben.

Die Erfindung ist in den beigefügten Ansprüchen angegeben.

### Bezugszeichenliste

- 11: Fördertrommel
- 12: Fördertrommel
- 13: Fördertrommel
- 14: Fördertrommel
- 20: stabförmige Artikel
- 21, 22: Aufnahmemulde
- 31: Aufnahmemulde
- 50: Reinigungseinrichtung
- 100: Förderanordnung
- 110, 110': Ringkörper
- 112: Steuerkörper
- 113: Durchbrechung
- 114: Durchbrechung
- 120, 120': Ringkörper
- 122: Steuerkörper
- 123: Durchbrechung
- 124: Durchbrechung
- 130, 130': Ringkörper
- 132: Steuerkörper
- 133: Durchbrechung
- 134: Durchbrechung
- 140, 140': Ringkörper
- 142: Steuerkörper
- 143: Durchbrechung
- 144: Durchbrechung
- 201, 202: Prüfeinrichtung
- 211, 212: Saugluftbohrung
- 221, 222: Saugluftbohrung
- 311, 312: Saugluftbohrung

- F: Filteransetzmaschine
- R₁₁, R₁₂, R₁₃, R₁₄: Rotationsachse

## Patentansprüche

1. Fördertrommel (13) zum queraxialen Fördern von stabförmigen Artikeln (20) der Tabak verarbeitenden Industrie, insbesondere Filterzigaretten oder Filterstäben oder Filterstabsegmenten, wobei die Fördertrommel (13) in Umfangsrichtung, vorzugsweise starre, Aufnahmemulden (21, 22) aufweist, wobei die Fördertrommel (13) um eine Rotationsachse (R₁₃) rotierend antreibbar oder angetrieben ist, wobei die Fördertrommel (13) eine geradzahlige Anzahl an Aufnahmemulden (21, 22) aufweist, wobei die Aufnahmemulden (21, 22) der Fördertrommel (13) jeweils eine oder mehrere Saugluftbohrungen aufweisen, **dadurch gekennzeichnet, dass** die Fördertrommel (13) zwei Arten von Aufnahmemulden (21, 22) aufweist, wobei die Aufnahmemulden (21) der ersten Art und die Aufnahmemulden (22) der zweiten Art in Umfangsrichtung der Fördertrommel (13) in einer Reihe hintereinander alternierend angeordnet sind, wobei die Aufnahmemulden (21) der ersten Art und die Aufnahmemulden (22) der zweiten Art sich in der Anordnung und/oder in den Positionen der Saugluftbohrungen in den Aufnahmemulden (21, 22) unterscheiden,
wobei die stabförmigen Artikel (20) entlang eines ersten Förderwegs auf der Fördertrommel (13) mittels der Fördertrommel (13) von einem ersten Übergabebereich, in dem stabförmige Artikel aus den Aufnahmemulden (21, 22) einer stromaufwärtigen Fördertrommel (11) an Aufnahmemulden (21) der ersten Art der Fördertrommel (13) jeweils übergeben werden oder übergebbar sind, zu einem zweiten Übergabebereich gefördert werden oder förderbar sind, wobei in dem zweiten Übergabebereich stabförmige Artikel aus den Aufnahmemulden (21) der ersten Art der Fördertrommel (13) an Aufnahmemulden (31) einer weiteren stromabwärtigen Fördertrommel (14) jeweils übergeben werden oder übergebbar sind, wobei entlang des ersten Förderwegs zwischen dem ersten Übergabebereich und dem zweiten Übergabebereich in den Aufnahmemulden (22) der zweiten Art keine stabförmigen Artikel angeordnet sind oder werden,
wobei im Inneren der Fördertrommel (13) ein ortsfester Steuerkörper (132) für die Saugluftbohrungen der Aufnahmemulden (21, 22) der Fördertrommel (13) vorgesehen ist, wobei entlang des ersten Förderwegs der stabförmigen Artikel auf der Fördertrommel (13) zwischen dem ersten Übergabebereich und dem zweiten Übergabebereich jeweils die Saugluftbohrung (211) der Aufnahmemulden (21) der ersten Art oder jeweils die Saugluftbohrungen (211, 212) der Aufnahmemulden (21) der ersten Art mittels des Steuerkörpers (132) geöffnet sind, so dass die in den Aufnahmemulden (21) der ersten Art angeordneten stabförmigen Artikel (20) über die Saugluftbohrung (211) der Aufnahmemulden (21) der ersten Art oder über die Saugluftbohrungen (211, 212) der Aufnahmemulden (21) der ersten Art mit Unterdruck jeweils beaufschlagt sind, wobei entlang des ersten Förderwegs jeweils die Saugluftbohrungen (221, 222) der Aufnahmemulden (22) der zweiten Art mittels des Steuerkörpers (132) geschlossen sind,
wobei bezogen auf die Rotationsrichtung der Fördertrommel (13) nach dem ersten Förderweg stabförmige Artikel entlang eines zweiten Förderwegs auf der Fördertrommel (13) mittels der Fördertrommel (13) von einem Übergabebereich, in dem stabförmige Artikel (20) aus den Aufnahmemulden (31) einer Fördertrommel (14) an Aufnahmemulden (22) der zweiten Art der Fördertrommel (13) jeweils übergeben werden oder übergebbar sind, zu einem weiteren Übergabebereich gefördert werden oder förderbar sind, wobei in dem weiteren Übergabebereich stabförmige Artikel aus den Aufnahmemulden (22) der zweiten Art der Fördertrommel (13) an Aufnahmemulden (21, 22) einer weiteren Fördertrommel (12) jeweils übergeben werden oder übergebbar sind, wobei entlang des zweiten Förderwegs zwischen dem einen Übergabebereich und dem weiteren Übergabebereich in den Aufnahmemulden (21) der ersten Art keine stabförmigen Artikel angeordnet sind oder werden,
wobei der Steuerkörper (132) derart ausgebildet ist, dass entlang des zweiten Förderwegs der stabförmigen Artikel (20) auf der Fördertrommel (13) jeweils die Saugluftbohrung (221, 222) der Aufnahmemulden (22) der zweiten Art oder jeweils die Saugluftbohrungen (221, 222) der Aufnahmemulden (22) der zweiten Art mittels des Steuerkörpers (132) geöffnet sind, so dass die in den Aufnahmemulden (22) der zweiten Art angeordneten stabförmigen Artikel (20) über die Saugluftbohrung der Aufnahmemulden (22) der zweiten Art oder über die Saugluftbohrungen (221, 222) der Aufnahmemulden (22) der zweiten Art mit Unterdruck jeweils beaufschlagt sind, wobei entlang des zweiten Förderwegs die Saugluftbohrungen (211, 212) der Aufnahmemulden (21) der ersten Art mittels des Steuerkörpers (132) geschlossen sind.

2. Fördertrommel (13) nach Anspruch 1, **dadurch gekennzeichnet, dass** der Steuerkörper (132) der Fördertrommel (13) jeweils Durchlassbereiche für die Saugluftbohrungen (211, 212) der Aufnahmemulden (21) der ersten Art und für die Saugluftbohrungen (221, 222) der Aufnahmemulden (22) der zweiten Art aufweist, wobei die Durchlassbereiche jeweils mit den Saugluftbohrungen (211, 212) der Aufnahmemulden (21) der ersten Art und mit den Saugluftbohrungen (221, 222) der Aufnahmemulden (22) der zweiten Art zusammenwirken, so dass die Aufnahmemulden mit Unterdruck beaufschlagbar sind und/oder wobei die Durchlassbereiche für die Saugluftbohrungen (211, 212) der Aufnahmemulden (21) der ersten Art und die Durchlassbereiche für die Saugluftbohrungen (221, 222) der Aufnahmemulden (22) der zweiten Art in axialer Richtung der Fördertrommel (13) und in Umfangsrichtung der Fördertrommel (13) versetzt angeordnet sind
und/oder dass wenigstens ein erster Durchlassbereich oder mehrere erste Durchlassbereiche des Steuerkörpers (132) der Fördertrommel (13) entlang des ersten Förderwegs der stabförmigen Artikel (20) auf der Fördertrommel (13) für die Aufnahmemulden der ersten Art vorgesehen sind und mit den Saugluftbohrungen (211, 212) der Aufnahmemulden (21) der ersten Art zusammenwirken, so dass die Saugluftbohrungen (211, 212) der Aufnahmemulden (21) der ersten Art mit Unterdruck beaufschlagbar sind, wobei entlang des ersten Förderwegs die Saugluftbohrungen (221, 222) der Aufnahmemulden (22) der zweiten Art nicht mit Unterdruck beaufschlagt sind, und dass wenigstens ein zweiter Durchlassbereich oder mehrere zweite Durchlassbereiche des Steuerkörpers (132) der Fördertrommel (13) entlang des zweiten Förderwegs der stabförmigen Artikel (20) auf der Fördertrommel (13) für die Aufnahmemulden (22) der zweiten Art vorgesehen sind und mit den Saugluftbohrungen (221, 222) der Aufnahmemulden (22) der zweiten Art zusammenwirken, so dass die Saugluftbohrungen (221, 222) der Aufnahmemulden (22) der zweiten Art mit Unterdruck beaufschlagbar sind, wobei entlang des zweiten Förderwegs die Saugluftbohrungen (211, 212) der Aufnahmemulden (21) der ersten Art nicht mit Unterdruck beaufschlagt sind
und/oder dass die Fördertrommel (13) auf der Außenseite wenigstens einen, vorzugsweise starren, Ringkörper (130) aufweist, wobei der wenigstens eine Ringkörper (130) der Fördertrommel (13) in Umfangsrichtung der Fördertrommel (13) in regelmäßigen Abständen alternierend in einer Reihe hintereinander angeordnete Aufnahmemulden (21) der ersten Art und Aufnahmemulden (22) der zweiten Art aufweist.

3. Fördertrommel (13) nach Anspruch 1 oder 2, **dadurch gekennzeichnet, dass** entlang des ersten Förderwegs und entlang des zweiten Förderwegs der stabförmigen Artikel (20) auf der Fördertrommel (13) die zu fördernden oder geförderten stabförmigen Artikel (20) in längsaxialer Richtung in den Aufnahmemulden (21) der ersten Art und in den Aufnahmemulden (22) der zweiten Art nicht bewegt, insbesondere längsaxial verschoben, werden
und/oder dass die Aufnahmemulden (21) der ersten Art und die Aufnahmemulden (22) der zweiten Art jeweils mehrere, insbesondere zwei oder drei, Saugluftbohrungen (211, 212; 221, 222) aufweisen, wobei die Saugluftbohrungen (211, 212; 221, 222) der jeweiligen Aufnahmemulden (21, 22) bezogen auf die Rotationsachse (R₁₃) der Fördertrommel (13) nebeneinander angeordnet sind, wobei über die Saugluftbohrungen (211, 212; 221, 222) die Aufnahmemulden (21, 22) jeweils mit Unterdruck beaufschlagbar sind, wobei die Saugluftbohrungen (211, 212; 221, 222) der Aufnahmemulden (21, 22) in Umfangsrichtung der Fördertrommel (13) jeweils in Reihen hintereinander vorgesehen sind
und/oder dass in Bezug auf die Rotationsache der Fördertrommel (13) die Saugluftbohrungen (211, 212) der Aufnahmemulden (21) der ersten Art und die Saugluftbohrungen (221, 222) der Aufnahmemulden (22) der zweiten Art entlang der Rotationsachse (R₁₃) an unterschiedlichen Positionen in den Aufnahmemulden (21, 22) ausgebildet sind, wobei die Positionen der Saugluftbohrungen (211, 212) der Aufnahmemulden (21) der ersten Art entlang der Rotationsachse (R₁₃) der Fördertrommel (13) nicht den Positionen der Saugluftbohrungen (221, 222) der Aufnahmemulden (22) der zweiten Art entlang der Rotationsachse (R₁₃) entsprechen
und/oder dass der erste Übergabebereich, in dem stabförmige Artikel aus den Aufnahmemulden (21, 22) der stromaufwärtigen Fördertrommel (13) an Aufnahmemulden (21) der ersten Art der Fördertrommel (13) jeweils übergeben werden oder übergebbar sind, dem Übergabebereich entspricht, in dem stabförmige Artikel (20) aus den Aufnahmemulden einer Fördertrommel (13) an die Aufnahmemulden (22) der zweiten Art der Fördertrommel (13) jeweils übergeben werden oder übergebbar sind, und/oder dass der zweite Übergabebereich, in dem stabförmige Artikel (20) aus den Aufnahmemulden (21) der ersten Art der Fördertrommel (13) an Aufnahmemulden der weiteren stromabwärtigen Fördertrommel (14) jeweils übergeben werden oder übergebbar sind, dem weiteren Übergabebereich entspricht, in dem die stabförmigen Artikel (20) aus den Aufnahmemulden (22) der zweiten Art der Fördertrommel (13) an Aufnahmemulden einer weiteren Fördertrommel (14) jeweils übergeben werden oder übergebbar sind.

4. Förderanordnung (100) zum queraxialen Fördern von stabförmigen Artikeln (20) der Tabak verarbeitenden Industrie, insbesondere Filterzigaretten oder Filterstäbe oder Filterstabsegmente, mit einer, vorzugsweise starre, Aufnahmemulden (21, 22) aufweisenden ersten Fördertrommel (13) zum queraxialen Fördern von stabförmigen Artikeln (20) in den Aufnahmemulden (21, 22), wobei die erste Fördertrommel (13) um eine Rotationsachse (R₁₃) rotierend antreibbar oder angetrieben ist, und mit einer, vorzugsweise starre, Aufnahmemulden (21, 22) aufweisenden zweiten Fördertrommel (14) zum queraxialen Fördern von stabförmigen Artikeln (20) in den Aufnahmemulden (21, 22), wobei die zweite Fördertrommel (14) um eine Rotationsachse (R₁₄) rotierend antreibbar oder angetrieben ist, **dadurch gekennzeichnet, dass** die erste Fördertrommel (13) eine geradzahlige Anzahl an Aufnahmemulden (21, 22) aufweist und die zweite Fördertrommel (14) eine ungeradzahlige Anzahl an Aufnahmemulden (31) aufweist,
wobei die stabförmigen Artikel (20) entlang eines ersten Förderwegs auf der ersten Fördertrommel (13) mittels der ersten Fördertrommel (13) zu einem Übergabebereich zwischen der ersten Fördertrommel (13) und der zweiten Fördertrommel (14) förderbar sind oder gefördert werden und die jeweils in den Aufnahmemulden (21) der ersten Fördertrommel (13) geförderten stabförmigen Artikel (20) in Aufnahmemulden (31) der zweiten Fördertrommel (14) übergeben werden oder übergebbar sind,
wobei die von der ersten Fördertrommel (13) übergebenen stabförmigen Artikel (20) mittels der zweiten Fördertrommel (14) zu dem Übergabebereich zwischen der ersten Fördertrommel (13) und der zweiten Fördertrommel (14) förderbar sind oder gefördert werden, und wobei die auf der zweiten Fördertrommel (14) geförderten stabförmigen Artikel (20) von der zweiten Fördertrommel (14) an die erste Fördertrommel (13) in die Aufnahmemulden (22) der ersten Fördertrommel (13) übergeben werden,
wobei die von der zweiten Fördertrommel (14) an die erste Fördertrommel (13) übergebenen stabförmigen Artikel (20) entlang eines zweiten Förderwegs mittels der ersten Fördertrommel (13) queraxial förderbar sind oder gefördert werden,
wobei die Aufnahmemulden (21, 22) der ersten Fördertrommel (13) jeweils mehrere Saugluftbohrungen (211, 212, 221, 222) aufweisen, wobei die Saugluftbohrungen (211, 212, 221, 222) bezogen auf die Rotationsachse (R₁₃) der ersten Fördertrommel (13) nebeneinander angeordnet sind, oder jeweils eine Saugluftbohrung (211, 212, 221, 222) aufweisen, wobei über die Saugluftbohrungen (211, 212, 221, 222) die Aufnahmemulden (21, 22) jeweils mit Unterdruck beaufschlagbar sind, wobei die Saugluftbohrungen (211, 212, 221, 222) der Aufnahmemulden (21, 22) in Umfangsrichtung der ersten Fördertrommel (13) jeweils in Reihen hintereinander vorgesehen sind,
wobei im Inneren der ersten Fördertrommel (13) ein ortsfester Steuerkörper (132) für die Saugluftbohrungen (211, 212, 221, 222) der Aufnahmemulden (21, 22) der ersten Fördertrommel (13) vorgesehen ist, wobei entlang des ersten Förderwegs der stabförmigen Artikel (20) auf der ersten Fördertrommel (13) jeweils eine erste Saugluftbohrung (211, 212) oder jeweils eine erste Kombination von Saugluftbohrungen (211, 212) der Aufnahmemulden (21) mittels des Steuerkörpers (132) geöffnet ist, so dass die in den Aufnahmemulden (21) angeordneten stabförmigen Artikel (20) über die erste Saugluftbohrung (211, 212) oder über die erste Kombination von Saugluftbohrungen (211, 212) mit Unterdruck jeweils beaufschlagt sind, wobei entlang des ersten Förderwegs jeweils eine zweite Saugluftbohrung (221, 222) oder jeweils eine zweite Kombination von Saugluftbohrungen (221, 222) der Aufnahmemulden (22) mittels des Steuerkörpers (132) geschlossen ist,
wobei der Steuerkörper (132) derart ausgebildet ist, dass entlang des zweiten Förderwegs der stabförmigen Artikel (20) auf der ersten Fördertrommel (13) jeweils die zweite Saugluftbohrung (221, 222) oder jeweils die zweite Kombination von Saugluftbohrungen (221, 222) der Aufnahmemulden (21, 22) mittels des Steuerkörpers (132) geöffnet ist, so dass die in den Aufnahmemulden (22) angeordneten stabförmigen Artikel (20) über die zweite Saugluftbohrung (221, 222) oder über die zweite Kombination von Saugluftbohrungen (221, 222) mit Unterdruck jeweils beaufschlagt sind, wobei entlang des zweiten Förderwegs die erste Saugluftbohrung (211, 212) oder jeweils die erste Kombination von Saugluftbohrungen (211, 212) der Aufnahmemulden (21) mittels des Steuerkörpers (132) geschlossen ist,
wobei die erste Fördertrommel (13) zwei Arten von Aufnahmemulden (21, 22) aufweist, wobei die Aufnahmemulden (21) der ersten Art und die Aufnahmemulden (22) der zweiten Art in Umfangsrichtung der Fördertrommel in einer Reihe hintereinander alternierend angeordnet sind, wobei Aufnahmemulden (21) der ersten Art und die Aufnahmemulden (22) der zweiten Art sich in der Anordnung und/oder in den Positionen der Saugluftbohrungen (211, 212, 221, 222) in den Aufnahmemulden (21, 22) unterscheiden,
wobei der Steuerkörper (132) der ersten Fördertrommel (13) jeweils Durchlassbereiche für die Saugluftbohrungen (211, 212, 221, 222) der Aufnahmemulden aufweist, wobei die Durchlassbereiche mit den Saugluftbohrungen (211, 212, 221, 222) der Aufnahmemulden (21, 22) zusammenwirken, so dass die Aufnahmemulden (211, 212, 221, 222) mit Unterdruck beaufschlagbar sind,
wobei wenigstens ein erster Durchlassbereich oder mehrere erste Durchlassbereiche des Steuerkörpers (132) der ersten Fördertrommel (13) entlang des ersten Förderwegs der stabförmigen Artikel (20) auf der ersten Fördertrommel (13) für die Aufnahmemulden (21) der ersten Art vorgesehen sind und mit den Saugluftbohrungen (211, 212) der Aufnahmemulden (21) der ersten Art zusammenwirken, so dass die Saugluftbohrungen (211, 212) der Aufnahmemulden (21) der ersten Art mit Unterdruck beaufschlagbar sind, wobei entlang des ersten Förderwegs Saugluftbohrungen (221, 222) der Aufnahmemulden (22) der zweiten Art nicht mit Unterdruck beaufschlagt sind,
und wobei wenigstens ein zweiter Durchlassbereich oder mehrere zweite Durchlassbereiche des Steuerkörpers (132) der ersten Fördertrommel (13) entlang des zweiten Förderwegs der stabförmigen Artikel (20) auf der ersten Fördertrommel (13) für die Aufnahmemulden (22) der zweiten Art vorgesehen sind und mit den Saugluftbohrungen (221, 222) der Aufnahmemulden (22) der zweiten Art zusammenwirken, so dass die Saugluftbohrungen (221, 222) der Aufnahmemulden (22) der zweiten Art mit Unterdruck beaufschlagbar sind, wobei entlang des zweiten Förderwegs die Saugluftbohrungen (211, 212) der Aufnahmemulden (21) der ersten Art nicht mit Unterdruck beaufschlagt sind.

5. Förderanordnung (100) nach Anspruch 4, **dadurch gekennzeichnet, dass** die Anzahl der Aufnahmemulden (31) der zweiten Fördertrommel (14) um eine Aufnahmemulde geringer oder um eine Aufnahmemulde größer ist als die Anzahl der Aufnahmemulden (21, 22) der ersten Fördertrommel (13).

6. Förderanordnung (100) nach Anspruch 4 oder 5, **dadurch gekennzeichnet, dass** die Durchlassbereiche für die Saugluftbohrungen (211, 212, 221, 222) in axialer Richtung der ersten Fördertrommel (13) und/oder in Umfangsrichtung der ersten Fördertrommel (13) versetzt angeordnet sind.

7. Förderanordnung (100) nach einem der Ansprüche 4 bis 6, **dadurch gekennzeichnet, dass** bezogen auf die Förderrichtung der stabförmigen Artikel (20) von der ersten Fördertrommel (13) zur zweiten Fördertrommel (14) gemäß dem ersten Förderweg stromaufwärts an der ersten Fördertrommel (13) wenigstens eine weitere Fördertrommel (12), die um eine Rotationsachse (R₁₂) rotierend angetrieben oder antreibbar ist, angeordnet ist,
wobei die wenigstens eine weitere stromaufwärtige Fördertrommel (12) eine geradzahlige Anzahl von Aufnahmemulden (21, 22) aufweist, wobei die Aufnahmemulden (21, 22) der wenigstens einen weiteren Fördertrommel (12) jeweils mehrere Saugluftbohrungen (211, 212, 221, 222) aufweisen, wobei die Saugluftbohrungen (211, 212, 221, 222) bezogen auf die Rotationsachse (R₁₂) der weiteren Fördertrommel (12) nebeneinander angeordnet sind, wobei über die Saugluftbohrungen die Aufnahmemulden jeweils mit Unterdruck beaufschlagbar oder beaufschlagt sind, wobei die Saugluftbohrungen in Umfangsrichtung der wenigstens einen weiteren Fördertrommel (12) jeweils in Reihen hintereinander vorgesehen sind, wobei im Inneren der wenigstens einen weiteren Fördertrommel (12) ein ortsfester Steuerkörper (122) für die Saugluftbohrungen vorgesehen ist, wobei entlang des Förderwegs der stabförmigen Artikel (20) von der wenigstens einen stromaufwärtigen weiteren Fördertrommel (12) zu der ersten Fördertrommel (13) gemäß dem ersten Förderweg der stabförmigen Artikel (20) auf der ersten Fördertrommel (13) jeweils eine erste Saugluftbohrung oder jeweils eine Kombination von Saugluftbohrungen der wenigstens einen weiteren Fördertrommel (12) mittels des Steuerkörpers (132) geöffnet ist, so dass die in den Aufnahmemulden angeordneten stabförmigen Artikel (20) über die erste Saugluftbohrung oder über die erste Kombination von Saugluftbohrungen mit Unterdruck jeweils beaufschlagt sind,
wobei entlang des Förderwegs zur ersten Fördertrommel (13) jeweils eine zweite Saugluftbohrung oder jeweils eine zweite Kombination von Saugluftbohrungen der Aufnahmemulden mittels des Steuerkörpers (132) geschlossen ist, wobei entlang des Förderwegs der stabförmigen Artikel (20) auf der wenigstens einen weiteren Fördertrommel (12) von der ersten Fördertrommel (13) weg stromabwärts jeweils die zweite Saugluftbohrung oder jeweils die zweite Kombination von Saugluftbohrungen der Aufnahmemulden mittels des Steuerkörpers (132) geöffnet ist, so dass die in den Aufnahmemulden angeordneten stabförmigen Artikel (20) über die zweite Saugluftbohrung oder über die zweite Kombination von Saugbohrungen mit Unterdruck beaufschlagt ist, wobei entlang des Förderwegs die erste Saugluftbohrung oder jeweils die erste Kombination von Saugbohrungen mittels des Steuerkörpers (132) geschlossen ist,
wobei insbesondere die Rotationsachse (R₁₃) der ersten Fördertrommel (13) und die Rotationsachse (R₁₂) der wenigstens einen weiteren Fördertrommel (12) in einer senkrechten Ebene übereinander angeordnet sind.

8. Förderanordnung (100) nach einem der Ansprüche 4 bis 7, **dadurch gekennzeichnet, dass** die Rotationsachse (R₁₃) der ersten Fördertrommel (13) und die Rotationsachse (R₁₄) der zweiten Fördertrommel (14) in einer senkrechten Ebene übereinander angeordnet sind.

9. Förderanordnung (100) nach einem der Ansprüche 4 bis 8, **dadurch gekennzeichnet, dass** die erste Fördertrommel (13) auf der Außenseite wenigstens einen, vorzugsweise starren, Ringkörper (130) aufweist, wobei der wenigstens eine Ringkörper (130) der ersten Fördertrommel (13) in Umfangsrichtung der ersten Fördertrommel (13) in regelmäßigen Abständen in einer Reihe hintereinander angeordnete Aufnahmemulden für die stabförmigen Artikel (20) aufweist,
und/oder dass die zweite Fördertrommel (14) auf der Außenseite wenigstens einen, vorzugsweise starren, Ringkörper (130) aufweist, wobei der wenigstens eine Ringkörper (130) der zweiten Fördertrommel (14) in Umfangsrichtung der zweiten Fördertrommel (14) in regelmäßigen Abständen in einer Reihe hintereinander angeordnete Aufnahmemulden für die stabförmigen Artikel (20) aufweist,
wobei insbesondere zur Förderung der stabförmigen Artikel (20) der Ringkörper der ersten Fördertrommel (13) und der Ringkörper der zweiten Fördertrommel (14) miteinander zusammenwirken, so dass die geförderten stabförmigen Artikel (20) von den Aufnahmemulden des Ringkörpers der ersten Fördertrommel (13) in die Aufnahmemulden des Ringkörpers der zweiten Fördertrommel (14) übergeben werden oder übergebbar sind und nach Förderung der stabförmigen Artikel (20) auf der zweiten Fördertrommel (14) die stabförmigen Artikel (20) von den Aufnahmemulden des Ringkörpers der zweiten Fördertrommel (14) in die Aufnahmemulden des Ringkörpers der ersten Fördertrommel (13) übergeben werden oder übergebbar sind, und dass bezogen auf die Rotationsachse (R₁₃) der ersten Fördertrommel (13) oder bezogen auf die Rotationsachse (R₁₄) der zweiten Fördertrommel (14) der wenigstens eine Ringkörper der ersten Fördertrommel (13) in axialer Richtung zu dem wenigstens einen Ringkörper der zweiten Fördertrommel (14) versetzt ist,
und/oder wobei insbesondere der Ringkörper der zweiten Fördertrommel (14) eine kleinere längsaxiale oder axiale Breite aufweist als der Ringkörper der ersten Fördertrommel (13).

10. Förderanordnung (100) nach einem der Ansprüche 4 bis 9, **dadurch gekennzeichnet, dass** an der ersten Fördertrommel (13) wenigstens eine Prüfeinrichtung zur Prüfung der auf der ersten Fördertrommel (13) geförderten stabförmigen Artikel (20) vorgesehen ist und/oder an der zweiten Fördertrommel (14) wenigstens eine Prüfeinrichtung zur Prüfung der auf der zweiten Fördertrommel (14) geförderten stabförmigen Artikel (20) vorgesehen ist und/oder an der wenigstens einen weiteren Fördertrommel (12) wenigstens eine Prüfeinrichtung zur Prüfung der auf der wenigstens einen weiteren Fördertrommel (12) geförderten stabförmigen Artikel (20) vorgesehen ist
und/oder dass entlang der Förderwege der stabförmigen Artikel (20) auf der ersten Fördertrommel (13) und auf der zweiten Fördertrommel (14) und gegebenenfalls auf der wenigstens einen weiteren Fördertrommel (12) die zu fördernden oder geförderten stabförmigen Artikel (20) in längsaxialer Richtung in den Aufnahmemulden der Fördertrommeln nicht bewegt, insbesondere längsaxial verschoben, werden
und/oder dass die Aufnahmemulden (31) der zweiten Fördertrommel (14) jeweils mehrere, insbesondere zwei, Saugluftbohrungen aufweisen, wobei die Saugluftbohrungen der Aufnahmemulden bezogen auf die Rotationsachse (R₁₄) der zweiten Fördertrommel (14) nebeneinander angeordnet sind, wobei über die Saugluftbohrungen die Aufnahmemulden jeweils mit Unterdruck beaufschlagbar sind, wobei bezogen auf die Förderrichtung der stabförmigen Artikel (20) auf der zweiten Fördertrommel (14) bei der Aufnahme von stabförmigen Artikeln (20) im Übergabebereich von der ersten Fördertrommel (13) mehrere oder alle Saugluftbohrungen der jeweiligen Artikel aufnehmenden Aufnahmemulde der zweiten Fördertrommel (14) mit Unterdruck beaufschlagt sind oder werden und entlang des Förderwegs der stabförmigen Artikel (20) auf der zweiten Fördertrommel (14) bis zum Übergabebereich der stabförmigen Artikel (20), in dem die stabförmigen Artikel (20) von der zweiten Fördertrommel (14) an die erste Fördertrommel (13), insbesondere zurück, übergeben werden oder übergebbar sind, weniger Saugluftbohrungen oder nur eine Saugluftbohrung der jeweiligen Aufnahmemulde mit Unterdruck beaufschlagt sind oder ist,
wobei insbesondere bei der Übergabe der auf der zweiten Fördertrommel (14) geförderten stabförmigen Artikel (20) aus den jeweiligen Aufnahmemulden (31) der zweiten Fördertrommel (14) an die jeweiligen Aufnahmemulden (21, 22) der ersten Fördertrommel (13) die Saugluftbohrungen der zweiten Fördertrommel (14) im Übergabebereich zwischen der zweiten Fördertrommel (14) und der ersten Fördertrommel (13) belüftet werden, so dass kein Unterdruck an den Saugluftbohrungen der jeweiligen, den stabförmigen Artikel (20) abgebenden Aufnahmemulde der zweiten Fördertrommel (14) anliegt.

11. Förderanordnung (100) nach einem der Ansprüche 4 bis 9, **dadurch gekennzeichnet, dass** die zweite Fördertrommel (14) eine Muldenreinigungseinrichtung (50), insbesondere wenigstens ein oder mehrere Schaltventile, zum Reinigen der Aufnahmemulden aufweist, wobei insbesondere die Muldenreinigungseinrichtung (50) derart eingerichtet ist, dass während der Förderung von stabförmigen Artikeln (20) auf der zweiten Fördertrommel (14) bei Rotation der Fördertrommel (14) die mit stabförmigen Artikeln (20) belegten Aufnahmemulden (31) nicht gereinigt werden und die Aufnahmemulden (31), die mit stabförmigen Artikeln (20) nicht belegt sind, gereinigt werden.

12. Trommelmaschine (F) der Tabak verarbeitenden Industrie, insbesondere Filteransetzmaschine oder Filterherstellungsmaschine oder Filterbereitstellungsmaschine, mit einer Fördertrommel (13) nach einem der Ansprüche 1 bis 3 oder mit einer Förderanordnung (100) nach einem der Ansprüche 4 bis 11.

13. Verfahren zum queraxialen Fördern von stabförmigen Artikeln (20) der Tabak verarbeitenden Industrie, insbesondere Filterzigaretten und/oder Filterstäbe und/oder Filterstabsegmente, unter Verwendung einer Fördertrommel (13) nach einem der Ansprüche 1 bis 3 oder unter Verwendung einer Förderanordnung (100) nach einem der Ansprüche 4 bis 11.

## Claims

1. A conveying drum (13) for conveying rod-shaped articles (20) from the tobacco processing industry in a transverse-axial manner, in particular filter cigarettes or filter rods or filter rod segments, wherein the conveying drum (13) has, preferably rigid, receiving troughs (21, 22) in the circumferential direction, wherein the conveying drum (13) can be or is driven in a rotating manner about a rotational axis (R₁₃), wherein the conveying drum (13) has an even number of receiving troughs (21, 22), wherein the receiving troughs (21, 22) of the conveying drum (13) each have one or more suction air holes, **characterized in that** the conveying drum (13) has two types of receiving troughs (21, 22), wherein the receiving troughs (21) of the first type and the receiving troughs (22) of the second type are arranged in an alternating manner behind one another in a row in the circumferential direction of the conveying drum (13), wherein the receiving troughs (21) of the first type and the receiving troughs (22) of the second type differ in the arrangement and/or in the positions of the suction air holes in the receiving troughs (21, 22),
wherein the rod-shaped articles (20) are or can be conveyed along a first conveying path on the conveying drum (13) by means of the conveying drum (13) from a first transfer region, in which rod-shaped articles are or can in each case be transferred from the receiving troughs (21, 22) of an upstream conveying drum (11) to receiving troughs (21) of the first type of the conveying drum (13), to a second transfer region, wherein rod-shaped articles are or can in each case be transferred from the receiving troughs (21) of the first type of the conveying drum (13) to receiving troughs (31) of a further downstream conveying drum (14) in the second transfer region, wherein no rod-shaped articles are or will be arranged along the first conveying path between the first transfer region and the second transfer region in the receiving troughs (22) of the second type,
wherein a stationary control body (132) is provided for the suction air holes of the receiving troughs (21, 22) of the conveying drum (13) in the interior of the conveying drum (13), wherein the suction air hole (211) of the receiving troughs (21) of the first type is in each case opened or the suction air holes (211, 212) of the receiving troughs (21) of the first type are in each case opened by means of the control body (132) along the first conveying path of the rod-shaped articles on the conveying drum (13) between the first transfer region and the second transfer region, so that the rod-shaped articles (20) arranged in the receiving troughs (21) of the first type are each supplied with a vacuum pressure via the suction air hole (211) of the receiving troughs (21) of the first type or via the suction air holes (211, 212) of the receiving troughs (21) of the first type, wherein the suction air holes (221, 222) of the receiving troughs (22) of the second type are each closed by means of the control body (132) along the first conveying path,
wherein, with respect to the rotational direction of the conveying drum (13) following the first conveying path, rod-shaped articles are or can be conveyed along a second conveying path on the conveying drum (13) by means of the conveying drum (13) from a transfer region, in which rod-shaped articles (20) are or can in each case be transferred from the receiving troughs (31) of a conveying drum (14) to receiving troughs (22) of the second type of the conveying drum (13), to a further transfer region, wherein rod-shaped articles are or can in each case be transferred from the receiving troughs (22) of the second type of the conveying drum (13) to receiving troughs (21, 22) of a further conveying drum (12) in the further transfer region, wherein no rod-shaped articles are or will be arranged along the second conveying path between the one transfer region and the further transfer region in the receiving troughs (21) of the first type,
wherein the control body (132) is configured in such a way that the suction air hole (221, 222) of the receiving troughs (22) of the second type is in each case opened or the suction air holes (221, 222) of the receiving troughs (22) of the second type are in each case opened by means of the control body (132) along the second conveying path of the rod-shaped articles (20) on the conveying drum (13), so that the rod-shaped articles (20) arranged in the receiving troughs (22) of the second type are each supplied with a vacuum pressure via the suction air hole of the receiving troughs (22) of the second type or via the suction air holes (221,222) of the receiving troughs (22) of the second type, wherein the suction air holes (211, 212) of the receiving troughs (21) of the first type are closed by means of the control body (132) along the second conveying path.

2. The conveying drum (13) according to Claim 1, **characterized in that** the control body (132) of the conveying drum (13) has in each case passage regions for the suction air holes (211, 212) of the receiving troughs of the first type and for the suction air holes (221, 222) of the receiving troughs (22) of the second type, wherein the passage regions each interact with the suction air holes (211, 212) of the receiving troughs (21) of the first type and with the suction air holes (221, 222) of the receiving troughs (22) of the second type, so that the receiving troughs can be supplied with a vacuum pressure and/or wherein the passage regions for the suction air holes (211, 212) of the receiving troughs (21) of the first type and the passage regions for the suction air holes (221, 222) of the receiving troughs (22) of the second type are arranged offset in the axial direction of the conveying drum (13) and in the circumferential direction of the conveying drum (13),
and/or that at least one first passage region or multiple first passage regions of the control body (132) of the conveying drum (13) is/are provided for the receiving troughs of the first type along the first conveying path of the rod-shaped articles (20) on the conveying drum (13) and interact(s) with the suction air holes (211, 212) of the receiving troughs (21) of the first type, so that the suction air holes (211, 212) of the receiving troughs (21) of the first type can be supplied with a vacuum pressure, wherein the suction air holes (221, 222) of the receiving troughs (22) of the second type are not supplied with a vacuum pressure along the first conveying path, and that at least one second passage region or multiple second passage regions of the control body (132) of the conveying drum (13) is/are provided for the receiving troughs (22) of the second type along the second conveying path of the rod-shaped articles (20) on the conveying drum (13) and interact(s) with the suction air holes (221, 222) of the receiving troughs (22) of the second type, so that the suction air holes (221, 222) of the receiving troughs (22) of the second type can be supplied with a vacuum pressure, wherein the suction air holes (211, 212) of the receiving troughs (21) of the first type are not supplied with a vacuum pressure along the second conveying path,
and/or that the conveying drum (13) has at least one, preferably rigid, ring body (130) on the outside, wherein the at least one ring body (130) of the conveying drum (13) has receiving troughs (21) of the first type and receiving troughs (22) of the second type arranged behind one another in a row in an alternating manner at regular intervals in the circumferential direction of the conveying drum (13).

3. The conveying drum (13) according to Claim 1 or 2, **characterized in that** the rod-shaped articles (20) to be conveyed or conveyed in the longitudinal axial direction in the receiving troughs (21) of the first type and in the receiving troughs (22) of the second type are not moved, in particular displaced in a longitudinal axial manner, along the first conveying path and along the second conveying path of the rod-shaped articles (20) on the conveying drum (13),
and/or that the receiving troughs (21) of the first type and the receiving troughs (22) of the second type each have multiple, in particular two or three, suction air holes (211, 212; 221, 222), wherein the suction air holes (211, 212; 221, 222) of the respective receiving troughs (21, 22) are arranged next to one another with respect to the rotational axis (R₁₃) of the conveying drum (13), wherein the receiving troughs (21, 22) can each be supplied with a vacuum pressure via the suction air holes (211, 212; 221, 222), wherein the suction air holes (211, 212; 221, 222) of the receiving troughs (21, 22) are each provided behind one another in rows in the circumferential direction of the conveying drum (13),
and/or with regard to the rotational axis of the conveying drum (13), the suction air holes (211, 212) of the receiving troughs (21) of the first type and the suction air holes (221, 222) of the receiving troughs (22) of the second type are configured along the rotational axis (R₁₃) at different positions in the receiving troughs (21, 22), wherein the positions of the suction air holes (211, 212) of the receiving troughs (21) of the first type along the rotational axis (R₁₃) of the conveying drum (13) do not correspond to the positions of the suction air holes (221, 222) of the receiving troughs (22) of the second type along the rotational axis (R₁₃),
and/or that the first transfer region, in which rod-shaped articles are or can in each case be transferred from the receiving troughs (21, 22) of the upstream conveying drum (13) to receiving troughs (21) of the first type of the conveying drum (13), corresponds to the transfer region, in which rod-shaped articles (20) are or can in each case be transferred from the receiving troughs of a conveying drum (13) to the receiving troughs (22) of the second type of the conveying drum (13), and/or that the second transfer region, in which rod-shaped articles (20) are or can in each case be transferred from the receiving troughs (21) of the first type of the conveying drum (13) to receiving troughs of the further downstream conveying drum (14), corresponds to the further transfer region, in which the rod-shaped articles (20) are or can in each case be transferred from the receiving troughs (22) of the second type of the conveying drum (13) to receiving troughs of a further conveying drum (14).

4. A conveying arrangement (100) for conveying rod-shaped articles (20) from the tobacco processing industry in a transverse-axial manner, in particular filter cigarettes or filter rods or filter rod segments, with a, preferably rigid, first conveying drum (13) having receiving troughs (21, 22) for conveying rod-shaped articles (20) in the receiving troughs (21, 22) in a transverse-axial manner, wherein the first conveying drum (13) can be or is driven in a rotating manner about a rotational axis (R₁₃), and with a, preferably rigid, second conveying drum (14) having receiving troughs (21, 22) for conveying rod-shaped articles (20) in the receiving troughs (21, 22) in a transverse-axial manner, wherein the second conveying drum (14) can be or is driven in a rotating manner about a rotational axis (R₁₄), **characterized in that** the first conveying drum (13) has an even number of receiving troughs (21, 22) and the second conveying drum (14) has an uneven number of receiving troughs (31),
wherein the rod-shaped articles (20) can be or are conveyed along a first conveying path on the first conveying drum (13) by means of the first conveying drum (13) to a transfer region between the first conveying drum (13) and the second conveying drum (14) and the rod-shaped articles (20) conveyed in each case in the receiving troughs (21) of the first conveying drum (13) are or can be transferred into receiving troughs (31) of the second conveying drum (14),
wherein the rod-shaped articles (20) transferred from the first conveying drum (13) can be or are conveyed by means of the second conveying drum (14) to the transfer region between the first conveying drum (13) and the second conveying drum (14), and wherein the rod-shaped articles (20) conveyed on the second conveying drum (14) are transferred from the second conveying drum (14) to the first conveying drum (13) into the receiving troughs (22) of the first conveying drum (13),
wherein the rod-shaped articles (20) transferred from the second conveying drum (14) to the first conveying drum (13) can be or are conveyed along a second conveying path by means of the first conveying drum (13) in a transverse-axial manner,
wherein the receiving troughs (21, 22) of the first conveying drum (13) each have multiple suction air holes (211, 212, 221, 222), wherein the suction air holes (211, 212, 221, 222) are arranged next to one another with respect to the rotational axis (R₁₃) of the first conveying drum (13), or each have a suction air hole (211, 212, 221, 222), wherein the receiving troughs (21, 22) can each be supplied with a vacuum pressure via the suction air holes (211, 212, 221, 222), wherein the suction air holes (211, 212, 221, 222) of the receiving troughs (21, 22) are each provided behind one another in rows in the circumferential direction of the first conveying drum (13),
wherein a stationary control body (132) is provided for the suction air holes (211, 212, 221, 222) of the receiving troughs (21, 22) of the first conveying drum (13) in the interior of the first conveying drum (13), wherein a first suction air hole (211, 212) is in each case opened or a first combination of suction air holes (211, 212) of the receiving troughs (21) is in each case opened by means of the control body (132) along the first conveying path of the rod-shaped articles (20) on the first conveying drum (13), so that the rod-shaped articles (20) arranged in the receiving troughs (21) are each supplied with a vacuum pressure via the first suction air hole (211, 212) or via the first combination of suction air holes (211, 212), wherein a second suction air hole (221, 222) is in each case closed or a second combination of suction air holes (221, 222) of the receiving troughs (22) is in each case closed by means of the control body (132) along the first conveying path,
wherein the control body (132) is configured in such a way that the second suction air hole (221, 222) is in each case opened or the second combination of suction air holes (221, 222) of the receiving troughs (21, 22) is in each case opened by means of the control body (132) along the second conveying path of the rod-shaped articles (20) on the first conveying drum (13), so that the rod-shaped articles (20) arranged in the receiving troughs (22) are each supplied with a vacuum pressure via the second suction air hole (221, 222) or via the second combination of suction air holes (221, 222), wherein the first suction air hole (211, 212) or the first combination of suction air holes (211, 212) of the receiving troughs (21) is in each case closed by means of the control body (132) along the second conveying path,
wherein the first conveying drum (13) has two types of receiving troughs (21, 22), wherein the receiving troughs (21) of the first type and the receiving troughs (22) of the second type are arranged in an alternating manner behind one another in a row in the circumferential direction of the conveying drum, wherein receiving troughs (21) of the first type and the receiving troughs (22) of the second type differ in the arrangement and/or in the positions of the suction air holes (211, 212, 221, 222) in the receiving troughs (21, 22),
wherein the control body (132) of the first conveying drum (13) has in each case passage regions for the suction air holes (211, 212, 221, 222) of the receiving troughs, wherein the passage regions interact with the suction air holes (211, 212, 221, 222) of the receiving troughs (21, 22), so that the receiving troughs (211, 212, 221, 222) can be supplied with a vacuum pressure,
wherein at least one first passage region or multiple first passage regions of the control body (132) of the first conveying drum (13) is/are provided for the receiving troughs (21) of the first type along the first conveying path of the rod-shaped articles (20) on the first conveying drum (13) and interact(s) with the suction air holes (211, 212) of the receiving troughs (21) of the first type, so that the suction air holes (211, 212) of the receiving troughs (21) of the first type can be supplied with a vacuum pressure, wherein suction air holes (221, 222) of the receiving troughs (22) of the second type are not supplied with a vacuum pressure along the first conveying path,
and wherein at least one second passage region or multiple second passage regions of the control body (132) of the first conveying drum (13) is/are provided for the receiving troughs (22) of the second type along the second conveying path of the rod-shaped articles (20) on the first conveying drum (13) and interact(s) with the suction air holes (221, 222) of the receiving troughs (22) of the second type, so that the suction air holes (221, 222) of the receiving troughs (22) of the second type can be supplied with a vacuum pressure, wherein the suction air holes (211, 212) of the receiving troughs (21) of the first type are not supplied with a vacuum pressure along the second conveying path.

5. The conveying arrangement (100) according to Claim 4, **characterized in that** the number of the receiving troughs (31) of the second conveying drum (14) is smaller around a receiving trough or is larger around a receiving trough than the number of the receiving troughs (21, 22) of the first conveying drum (13).

6. The conveying arrangement (100) according to Claim 4 or 5, **characterized in that** the passage regions for the suction air holes (211, 212, 221, 222) are arranged offset in the axial direction of the first conveying drum (13) and/or in the circumferential direction of the first conveying drum (13).

7. The conveying arrangement (100) according to any one of Claims 4 to 6, **characterized in that**, with respect to the conveying direction of the rod-shaped articles (20) from the first conveying drum (13) to the second conveying drum (14) according to the first conveying path, at least one further conveying drum (12) which is or can be driven in a rotating manner about a rotational axis (R12), is arranged upstream on the first conveying drum (13),
wherein the at least one further upstream conveying drum (12) has an even number of receiving troughs (21, 22), wherein the receiving troughs (21, 22) of the at least one further conveying drum (12) each have multiple suction air holes (211, 212, 221, 222), wherein the suction air holes (211, 212, 221, 222) are arranged next to one another with respect to the rotational axis (R12) of the further conveying drum (12), wherein the receiving troughs can be or are supplied in each case with a vacuum pressure via the suction air holes, wherein the suction air holes are each provided behind one another in rows in the circumferential direction of the at least one further conveying drum (12), wherein a stationary control body (122) is provided for the suction air holes in the interior of the at least one further conveying drum (12), wherein a first suction air hole is in each case opened or a combination of suction air holes of the at least one further conveying drum (12) is in each case opened by means of the control body (132) along the conveying path of the rod-shaped articles (20) from the at least one upstream further conveying drum (12) to the first conveying drum (13) according to the first conveying path of the rod-shaped articles (20) on the first conveying drum (13), so that the rod-shaped articles (20) arranged in the receiving troughs are each supplied with a vacuum pressure via the first suction air hole or via the first combination of suction air holes,
wherein a second suction air hole is in each case closed or a second combination of suction air holes of the receiving troughs is in each case closed by means of the control body (132) along the conveying path to the first conveying drum (13), wherein the second suction air hole is in each case opened or the second combination of suction air holes of the receiving troughs is in each case opened by means of the control body (132) along the conveying path of the rod-shaped articles (20) on the at least one further conveying drum (12) downstream away from the first conveying drum (13), so that the rod-shaped articles (20) arranged in the receiving troughs are supplied with a vacuum pressure via the second suction air hole or via the second combination of suction holes, wherein the first suction air hole or the first combination of suction holes is in each case closed by means of the control body (132) along the conveying path,
wherein in particular the rotational axis (R**13**) of the first conveying drum (13) and the rotational axis (R₁₂) of the at least one further conveying drum (12) are arranged above one another in a vertical plane.

8. The conveying arrangement (100) according to any one of Claims 4 to 7, **characterized in that** the rotational axis (R₁₃) of the first conveying drum (13) and the rotational axis (R₁₄) of the second conveying drum (14) are arranged above one another in a vertical plane.

9. The conveying arrangement (100) according to any one of Claims 4 to 8, **characterized in that** the first conveying drum (13) has at least one, preferably rigid, ring body (130) on the outside, wherein the at least one ring body (130) of the first conveying drum (13) has receiving troughs for the rod-shaped articles (20) arranged behind one another in a row at regular intervals in the circumferential direction of the first conveying drum (13),
and/or that the second conveying drum (14) has at least one, preferably rigid, ring body (130) on the outside, wherein the at least one ring body (130) of the second conveying drum (14) has receiving troughs for the rod-shaped articles (20) arranged behind one another in a row at regular intervals in the circumferential direction of the second conveying drum (14),
wherein in particular the ring body of the first conveying drum (13) and the ring body of the second conveying drum (14) interact with one another to convey the rod-shaped articles (20), so that the conveyed rod-shaped articles (20) are or can be transferred from the receiving troughs of the ring body of the first conveying drum (13) into the receiving troughs of the ring body of the second conveying drum (14) and, following conveying of the rod-shaped articles (20) on the second conveying drum (14), the rod-shaped articles (20) are or can be transferred from the receiving troughs of the ring body of the second conveying drum (14) into the receiving troughs of the ring body of the first conveying drum (13), and that with respect to the rotational axis (R₁₃) of the first conveying drum (13) or with respect to the rotational axis (R₁₄) of the second conveying drum (14) the at least one ring body of the first conveying drum is offset in the axial direction from the at least one ring body of the second conveying drum (14),
and/or wherein in particular the ring body of the second conveying drum (14) has a smaller longitudinal axial or axial width than the ring body of the first conveying drum (13).

10. The conveying arrangement (100) according to any one of Claims 4 to 9, **characterized in that** at least one testing device is provided on the first conveying drum (13) for testing the rod-shaped articles (20) conveyed on the first conveying drum (13) and/or at least one testing device is provided on the second conveying drum (14) for testing the rod-shaped articles (20) conveyed on the second conveying drum (14) and/or at least one testing device is provided on the at least one further conveying drum (12) for testing the rod-shaped articles (20) conveyed on the at least one further conveying drum (12),
and/or that the rod-shaped articles (20) to be conveyed or conveyed are not moved in the longitudinal axial direction, in particular displaced in a longitudinal axial manner, in the receiving troughs of the conveying drums along the conveying paths of the rod-shaped articles (20) on the first conveying drum (13) and on the second conveying drum (14) and, if applicable, on the at least one further conveying drum (12),
and/or that the receiving troughs (31) of the second conveying drum (14) each have multiple, in particular two, suction air holes, wherein the suction air holes of the receiving troughs are arranged next to one another with respect to the rotational axis (R₁₄) of the second conveying drum (14), wherein the receiving troughs can each be supplied with a vacuum pressure via the suction air holes, wherein multiple or all of the suction air holes of the receiving trough of the second conveying drum (14) receiving respective articles are or will be supplied with a vacuum pressure with respect to the conveying direction of the rod-shaped articles (20) on the second conveying drum (14) during the receipt of rod-shaped articles (20) in the transfer region from the first conveying drum (13), and fewer suction air holes or only one suction air hole of the respective receiving trough are or is supplied with a vacuum pressure along the conveying path of the rod-shaped articles (20) on the second conveying drum (14) up to the transfer region of the rod-shaped articles (20), in which the rod-shaped articles (20) are or can be transferred, in particular back, from the second conveying drum (14) to the first conveying drum (13),
wherein in particular the suction air holes of the second conveying drum (14) are ventilated in the transfer region between the second conveying drum (14) and the first conveying drum (13) during the transfer of the rod-shaped articles (20) conveyed on the second conveying drum (14) from the respective receiving troughs (31) of the second conveying drum (14) to the respective receiving troughs (21, 22) of the first conveying drum (13), so that no vacuum pressure is applied at the suction air holes of the respective receiving trough of the second conveying drum (14) which delivers the rod-shaped articles (20).

11. The conveying arrangement (100) according to any one of Claims 4 to 9, **characterized in that** the second conveying drum (14) has a trough cleaning device (50), in particular at least one or more switching valves, for cleaning the receiving troughs, wherein in particular the trough cleaning device (50) is designed in such a way that during the conveying of rod-shaped articles (20) on the second conveying drum (14), when the conveying drum (14) rotates, the receiving troughs (31) occupied by rod-shaped articles (20) are not cleaned and the receiving troughs (31) which are not occupied by rod-shaped articles (20) are cleaned.

12. A drum machine (F) from the tobacco processing industry, in particular a filter assembling machine or filter producing machine or filter providing machine, having a conveying drum (13) according to any one of Claims 1 to 3 or having a conveying arrangement (100) according to any one of Claims 4 to 11.

13. A method for conveying rod-shaped articles (20) from the tobacco processing industry in a transverse-axial manner, in particular filter cigarettes and/or filter rods and/or filter rod segments, using a conveying drum (13) according to any one of Claims 1 to 3 or using a conveying arrangement (100) according to any one of Claims 4 to 11.

## Revendications

1. Tambour de transport (13) pour le transport transversal axial d'articles (20) en forme de tige de l'industrie de transformation du tabac, en particulier de cigarettes à filtre ou de tiges de filtre ou de segments de tige de filtre, le tambour de transport (13) étant muni, dans la direction circonférentielle, de cavités de réception (21, 22), de préférence rigides, le tambour de transport (13) étant apte à être entraîné ou étant entraîné en rotation autour d'un axe de rotation (R₁₃), le tambour de transport (13) présentant un nombre pair de cavités de réception (21, 22), les cavités de réception (21, 22) du tambour de transport (13) présentent chacune un ou plusieurs trous d'aspiration d'air, **caractérisé en ce que** le tambour de transport (13) présente deux types de cavités de réception (21, 22), les cavités de réception (21) du premier type et les cavités de réception (22) du deuxième type étant agencées de façon alternée sur une rangée les unes derrière les autres dans la direction circonférentielle du tambour de transport (13), les cavités de réception (21) du premier type et les cavités de réception (22) du deuxième type se distinguant par l'agencement et/ou les positions des trous d'aspiration d'air dans les cavités de réception (21, 22),
les articles (20) en forme de tige étant transportés ou étant aptes à être transportés le long d'un premier trajet de transport sur le tambour de transport (13) au moyen du tambour de transport (13) depuis une première zone de transfert, dans laquelle des articles en forme de tige sont chacun transférés ou aptes à être transférés depuis les cavités de réception (21, 22) d'un tambour de transport amont (11) vers des cavités de réception (21) du premier type du tambour de transport (13), vers une deuxième zone de transfert; dans la deuxième zone de transfert, des articles en forme de tige sont chacun transférés ou aptes à être transférés des cavités de réception (21) du premier type du tambour de transport (13) vers des cavités de réception (31) d'un autre tambour de transport (14) situé en aval, aucun article en forme de tige n'étant disposé ou apte à être disposé dans les cavités de réception (22) du deuxième type le long du premier trajet de transport entre la première zone de transfert et la deuxième zone de transfert,
un corps de commande fixe (132) étant prévu à l'intérieur du tambour de transport (13) pour les trous d'aspiration d'air des cavités de réception (21, 22) du tambour de transport (13); le long du premier trajet de transport des articles en forme de tige sur le tambour de transport (13), entre la première zone de transfert et la deuxième zone de transfert, respectivement le trou d'air d'aspiration (211) des cavités de réception (21) du premier type ou respectivement les trous d'aspiration d'air (211, 212) des cavités de réception (21) du premier type sont ouverts au moyen du corps de commande (132), de sorte que les articles (20) en forme de tige disposés dans les cavités de réception (21) du premier type sont chacun soumis à une dépression par l'intermédiaire du trou d'air d'aspiration (211) des cavités de réception (21) du premier type ou par l'intermédiaire des trous d'aspiration d'air (211, 212) des cavités de réception (21) du premier type, les trous d'aspiration d'air (221, 222) des cavités de réception (22) du deuxième type étant chacun fermés au moyen du corps de commande (132) le long du premier trajet de transport;
par rapport au sens de rotation du tambour de transport (13) après le premier trajet de transport, des articles en forme de tige sont transportés ou sont aptes à être transportés le long d'un deuxième trajet de transport sur le tambour de transport (13) au moyen du tambour de transport (13) depuis une zone de transfert dans laquelle des articles (20) en forme de tige sont chacun transférés ou aptes à être transférés depuis les cavités de réception (31) d'un tambour de transport (14) vers des cavités de réception (22) du deuxième type du tambour de transport (13), vers une autre zone de transfert; dans l'autre zone de transfert, des articles en forme de tige sont chacun transférés ou aptes à être transférés des cavités de réception (22) du deuxième type du tambour de transport (13) en des cavités de réception (21, 22) d'un autre tambour de transport (12), aucun article en forme de tige n'étant disposé ou apte à être disposé dans les cavités de réception (21) du premier type le long du deuxième trajet de transport entre la première zone de transfert et l'autre zone de transfert,
le corps de commande (132) étant conçu de telle sorte que, le long du deuxième trajet de transport des articles (20) en forme de tige sur le tambour de transport (13), respectivement le trou d'air d'aspiration (221, 222) des cavités de réception (22) du deuxième type ou respectivement les trous d'aspiration d'air (221, 222) des cavités de réception (22) du deuxième type sont ouverts au moyen du corps de commande (132), de sorte que les articles (20) en forme de tige disposés dans les cavités de réception (22) du deuxième type sont chacun soumis à une dépression par l'intermédiaire du trou d'air d'aspiration des cavités de réception (22) du deuxième type ou par l'intermédiaire des trous d'aspiration d'air (221, 222) des cavités de réception (22) du deuxième type, les trous d'aspiration d'air (211, 212) des cavités de réception (21) du premier type étant fermés au moyen du corps de commande (132) le long du deuxième trajet de transport.

2. Tambour de transport (13) selon la revendication 1, **caractérisé en ce que** le corps de commande (132) du tambour de transport (13) présente respectivement des zones de passage pour les trous d'aspiration d'air (211, 212) des cavités de réception (21) du premier type et pour les trous d'aspiration d'air (221, 222) des cavités de réception (22) du deuxième type, les zones de passage étant chacune reliées aux trous d'aspiration d'air (211, 212) des cavités de réception (21) du premier type et aux trous d'aspiration d'air (221, 222) des cavités de réception (22) du deuxième type, de sorte que les cavités de réception sont aptes à être mises en dépression et/ou les zones de passage pour les trous d'aspiration d'air (211, 212) des cavités de réception (21) du premier type et les zones de passage pour les trous d'aspiration d'air (221, 222) des cavités de réception (22) du deuxième type sont agencées de manière décalée dans la direction axiale du tambour de transport (13) et dans la direction circonférentielle du tambour de transport (13),
et/ou **en ce qu'**au moins une première zone de passage ou plusieurs premières zones de passage du corps de commande (132) du tambour de transport (13) sont prévues le long du premier trajet de transport des articles (20) en forme de tige sur le tambour de transport (13) pour les cavités de réception du premier type et sont reliées aux trous d'aspiration d'air (211, 212) des cavités de réception (21) du premier type, de sorte que les trous d'aspiration d'air (211, 212) des cavités de réception (21) du premier type sont aptes à être mis en dépression, les trous d'aspiration d'air (221, 222) des cavités de réception (22) du deuxième type n'étant pas mis en dépression le long du premier trajet de transport, et **en ce qu'**au moins une deuxième zone de passage ou plusieurs deuxièmes zones de passage du corps de commande (132) du tambour de transport (13) sont prévues le long du deuxième trajet de transport des articles (20) en forme de tige sur le tambour de transport (13) pour les cavités de réception (22) du deuxième type et sont reliées aux trous d'aspiration d'air (221, 222) des cavités de réception (22) du deuxième type, de sorte que les trous d'aspiration d'air (221, 222) des cavités de réception (22) du deuxième type sont aptes à être mis en dépression, les trous d'aspiration d'air (211, 212) des cavités de réception (21) du premier type n'étant pas mis en dépression le long du deuxième trajet de transport,
et/ou **en ce que** le tambour de transport (13) présente sur le côté extérieur au moins un corps annulaire (130), de préférence rigide, ledit au moins un corps annulaire (130) du tambour de transport (13) présentant, dans la direction circonférentielle du tambour de transport (13), des cavités de réception (21) du premier type et des cavités de réception (22) du deuxième type agencées à intervalles réguliers, en alternance sur une rangée.

3. Tambour de transport (13) selon la revendication 1 ou la revendication 2, **caractérisé en ce que**, le long du premier trajet de transport et le long du deuxième trajet de transport des articles (20) en forme de tige sur le tambour de transport (13), les articles (20) en forme de tige à transporter ou transportés ne sont pas déplacés dans la direction axiale longitudinale dans les cavités de réception (21) du premier type et dans les cavités de réception (22) du deuxième type, en particulier sont déplacés dans l'axe longitudinal,
et/ou **en ce que** les cavités de réception (21) du premier type et les cavités de réception (22) du deuxième type présentent chacune plusieurs, en particulier deux ou trois, trous d'aspiration d'air (211, 212; 221, 222), les trous d'aspiration d'air (211, 212; 221, 222) des cavités de réception respectives (21, 22) étant agencés les uns à côté des autres par rapport à l'axe de rotation (R₁₃) du tambour de transport (13), les cavités de réception (21, 22) étant chacune aptes à être alimentées en dépression par les trous d'aspiration (211, 212; 221, 222), les trous d'aspiration d'air (211, 212; 221, 222) des cavités de réception (21, 22) étant prévus respectivement en rangées les uns derrière les autres dans la direction circonférentielle du tambour de transport (13),
et/ou **en ce que**, par rapport à l'axe de rotation du tambour de transport (13), les trous d'aspiration d'air (211, 212) des cavités de réception (21) du premier type et les trous d'aspiration d'air (221, 222) des cavités de réception (22) du deuxième type sont formés le long de l'axe de rotation (R₁₃) en des positions différentes dans les cavités de réception (21, 22), les positions des trous d'aspiration d'air (211, 212) des cavités de réception (21) du premier type, le long de l'axe de rotation (R₁₃) du tambour de transport (13), ne correspondant pas aux positions des trous d'aspiration d'air (221, 222) des cavités de réception (22) du deuxième type le long de l'axe de rotation (R₁₃),
et/ou **en ce que** la première zone de transfert, dans laquelle des articles en forme de tige sont chacun transférés ou aptes à être transférés des cavités de réception (21, 22) du tambour de transport amont (13) aux cavités de réception (21) du premier type du tambour de transport (13), correspond à la zone de transfert dans laquelle des articles (20) en forme de tige sont chacun transférés ou aptes à être transférés depuis les cavités de réception d'un tambour de transport (13) aux cavités de réception (22) du deuxième type du tambour de transport (13), et/ou **en ce que** la deuxième zone de transfert, dans laquelle des articles (20) en forme de tige sont chacun transférés ou aptes à être transférés des cavités de réception (21) du premier type du tambour de transport (13) à des cavités de réception de l'autre tambour de transport (14) situé en aval, correspond à l'autre zone de transfert, dans laquelle les articles (20) en forme de tige sont chacun transférés ou aptes à être transférés des cavités de réception (22) du deuxième type du tambour de transport (13) à des cavités de réception d'un autre tambour de transport (14).

4. Agencement de transport (100) pour le transport transversal axial d'articles (20) en forme de tige de l'industrie de transformation du tabac, en particulier des cigarettes à filtre ou des tiges de filtre ou des segments de tige de filtre, avec un premier tambour de transport (13) présentant des cavités de réception (21, 22), de préférence rigides, pour le transport transversal axial d'articles (20) en forme de tige dans les cavités de réception (21, 22), le premier tambour de transport (13) étant apte à être entraîné ou étant entraîné en rotation autour d'un axe de rotation (R₁₃), et avec un deuxième tambour de transport (14) présentant des cavités de réception (21, 22), de préférence rigides, pour le transport transversal axial d'articles (20) en forme de tige dans les cavités de réception (21, 22), le deuxième tambour de transport (14) étant apte à être entraîné ou étant entraîné en rotation autour d'un axe de rotation (R₁₄), **caractérisé en ce que** le premier tambour de transport (13) présente un nombre pair de cavités de réception (21, 22) et le deuxième tambour de transport (14) présente un nombre impair de cavités de réception (31),
les articles (20) en forme de tige étant aptes à être transportés ou étant transportés le long d'un premier trajet de transport sur le premier tambour de transport (13) au moyen du premier tambour de transport (13) vers une zone de transfert entre le premier tambour de transport (13) et le deuxième tambour de transport (14), et les articles (20) en forme de tige transportés respectivement dans les cavités de réception (21) du premier tambour de transport (13) étant transférés ou étant aptes à être transférés dans des cavités de réception (31) du deuxième tambour de transport (14),
les articles (20) en forme de tige transférés par le premier tambour de transport (13) étant aptes à être transportés ou étant transportés au moyen du deuxième tambour de transport (14) vers la zone de transfert entre le premier tambour de transport (13) et le deuxième tambour de transport (14), et les articles (20) en forme de tige transportés sur le deuxième tambour de transport (14) étant transférés par le deuxième tambour de transport (14) au premier tambour de transport (13) dans les cavités de réception (22) du premier tambour de transport (13),
les articles (20) en forme de tige transférés du deuxième tambour de transport (14) au premier tambour de transport (13) étant aptes à être transportés ou étant transportés le long d'un deuxième trajet de transport au moyen du premier tambour de transport (13) dans le sens transversal axial,
les cavités de réception (21, 22) du premier tambour de transport (13) présentant chacune plusieurs trous d'aspiration d'air (211, 212, 221, 222), les trous d'aspiration d'air (211, 212, 221, 222) étant agencés les uns à côté des autres par rapport à l'axe de rotation (R₁₃) du premier tambour de transport (13), ou présentant chacune un trou d'aspiration d'air (211, 212, 221, 222), les cavités de réception (21, 22) étant chacune aptes à être alimentées en dépression par l'intermédiaire des trous d'aspiration d'air (211, 212, 221, 222), les trous d'aspiration d'air (211, 212, 221, 222) des cavités de réception (21, 22) étant prévus respectivement en rangées les uns derrière les autres dans la direction circonférentielle du premier tambour de transport (13),
un corps de commande (132) fixe étant prévu à l'intérieur du premier tambour de transport (13) pour les trous d'aspiration d'air (211, 212, 221, 222) des cavités de réception (21, 22) du premier tambour de transport (13), un premier trou d'air d'aspiration (211, 212) ou les trous d'une première combinaison de trous d'aspiration d'air (211, 212) des cavités de réception (21) étant chacun ouverts au moyen du corps de commande (132) le long du premier trajet de transport des articles (20) en forme de tige sur le premier tambour de transport (13), de sorte que les articles (20) en forme de tige disposés dans les cavités de réception (21) sont chacun soumis à une dépression par le premier trou d'air d'aspiration (211, 212) ou par la première combinaison de trous d'aspiration d'air (211, 212), un deuxième trou d'air d'aspiration (221, 222) ou les trous d'une deuxième combinaison de trous d'aspiration d'air (221, 222) des cavités de réception (22) étant chacun fermés le long du premier trajet de transport au moyen du corps de commande (132),
le corps de commande (132) étant conçu de telle sorte que, le long du deuxième trajet de transport des articles (20) en forme de tige sur le premier tambour de transport (13), respectivement le deuxième trou d'air d'aspiration (221, 222) ou respectivement les trous de la deuxième combinaison de trous d'aspiration d'air (221, 222) des cavités de réception (21, 22) est ouverts au moyen du corps de commande (132), de sorte que les articles (20) en forme de tige disposés dans les cavités de réception (22) sont chacun soumis à une dépression par l'intermédiaire du deuxième trou d'air d'aspiration (221, 222) ou par l'intermédiaire de la deuxième combinaison de trous d'aspiration d'air (221, 222), le premier trou d'air d'aspiration (211, 212) ou respectivement les trous de la première combinaison de trous d'aspiration d'air (211, 212) des cavités de réception (21) étant fermés au moyen du corps de commande (132) le long du deuxième trajet de transport,
le premier tambour de transport (13) comprend deux types de cavités de réception (21, 22), les cavités de réception (21) du premier type et les cavités de réception (22) du deuxième type étant agencées de façon alternée l'une derrière l'autre sur une rangée dans la direction circonférentielle du tambour de transport, les cavités de réception (21) du premier type et les cavités de réception (22) du deuxième type se différenciant par l'agencement et/ou les positions des trous d'aspiration d'air (211, 212, 221, 222) dans les cavités de réception (21, 22),
le corps de commande (132) du premier tambour de transport (13) présentant respectivement des zones de passage pour les trous d'aspiration d'air (211, 212, 221, 222) des cavités de réception, les zones de passage étant reliées aux trous d'aspiration d'air (211, 212, 221, 222) des cavités de réception (21, 22), de sorte que les cavités de réception (211, 212, 221, 222) sont aptes à être alimentées en dépression,
au moins une première zone de passage ou plusieurs premières zones de passage du corps de commande (132) du premier tambour de transport (13) sont prévues le long du premier trajet de transport des articles (20) en forme de tige sur le premier tambour de transport (13) pour les cavités de réception (22) du premier type et sont reliées aux trous d'aspiration d'air (211, 212) des cavités de réception (21) du premier type, de sorte que les trous d'aspiration d'air (211, 212) des cavités de réception (21) du premier type sont aptes à être mis en dépression, des trous d'aspiration d'air (221, 222) des cavités de réception (22) du deuxième type n'étant pas mis en dépression le long du premier trajet de transport,
et au moins une deuxième zone de passage ou plusieurs deuxièmes zones de passage du corps de commande (132) du premier tambour de transport (13) sont prévues le long du deuxième trajet de transport des articles (20) en forme de tige sur le premier tambour de transport (13) pour les cavités de réception (22) du deuxième type et sont reliées aux trous d'aspiration d'air (221, 222) des cavités de réception (22) du deuxième type, de sorte que les trous d'aspiration d'air (221, 222) des cavités de réception (22) du deuxième type sont aptes à être mis en dépression, les trous d'aspiration d'air (211, 212) des cavités de réception (21) du premier type n'étant pas mis en dépression le long du deuxième trajet de transport.

5. Agencement de transport (100) selon la revendication 4, **caractérisé en ce que** le nombre de cavités de réception (31) du deuxième tambour de transport (14) est inférieur d'une cavité de réception ou supérieur d'une cavité de réception au nombre de cavités de réception (21, 22) du premier tambour de transport (13).

6. Agencement de transport (100) selon la revendication 4 ou la revendication 5, **caractérisé en ce que** les zones de passage pour les trous d'aspiration d'air (211, 212, 221, 222) sont agencées de façon décalée dans la direction axiale du premier tambour de transport (13) et/ou dans la direction circonférentielle du premier tambour de transport (13).

7. Agencement de transport (100) selon l'une des revendications 4 à 6, **caractérisé en ce que**, par rapport à la direction de transport des articles (20) en forme de tige du premier tambour de transport (13) au deuxième tambour de transport (14) selon le premier trajet de transport, au moins un autre tambour de transport (12), qui est entraîné ou apte à être entraîné en rotation autour d'un axe de rotation (R₁₂), est agencé en amont sur le premier tambour de transport (13),
ledit au moins un autre tambour de transport (12) situé en amont présente un nombre pair de cavités de réception (21, 22), les cavités de réception (21, 22) dudit au moins un autre tambour de transport (12) présentant chacune plusieurs trous d'aspiration d'air (211, 212, 221, 222), les trous d'aspiration d'air (211, 212, 221, 222) sont agencés les uns à côté des autres par rapport à l'axe de rotation (R₁₂) de l'autre tambour de transport (12), les cavités de réception étant apte à être mises en dépression ou étant mises en dépression par l'intermédiaire des trous d'aspiration, les trous d'aspiration étant prévus en rangées les uns derrière les autres dans la direction circonférentielle dudit au moins un autre tambour de transport (12), un corps de commande (122) fixe pour les trous d'aspiration d'air étant prévu à l'intérieur dudit au moins un autre tambour de transport (12), un premier trou d'air d'aspiration ou les trous d'une combinaison de trous d'aspiration d'air dudit au moins un autre tambour de transport (12) étant chacun ouverts au moyen du corps de commande (132) le long du trajet de transport des articles (20) en forme de tige dudit au moins un autre tambour de transport (12) situé en amont vers le premier tambour de transport (13) conformément au premier trajet de transport des articles (20) en forme de tige sur le premier tambour de transport (13), de sorte que les articles (20) en forme de tige disposés dans les cavités de réception sont chacun soumis à une dépression par le premier trou d'air d'aspiration ou par la première combinaison de trous d'aspiration d'air,
un deuxième trou d'air d'aspiration ou les trous d'une deuxième combinaison de trous d'aspiration d'air des cavités de réception étant chacun fermés au moyen du corps de commande (132) le long du trajet de transport vers le premier tambour de transport (13), le deuxième trou d'air d'aspiration ou les trous de la deuxième combinaison de trous d'aspiration d'air des cavités de réception étant chacun ouverts au moyen du corps de commande (132) le long du trajet de transport des articles (20) en forme de tige sur ledit au moins un autre tambour de transport (12) en aval en s'éloignant du premier tambour de transport (13), de sorte que les articles (20) en forme de tige disposés dans les cavités de réception sont soumis à une dépression par le biais du deuxième trou d'air d'aspiration ou par le biais des trous de la deuxième combinaison de trous d'aspiration, le premier trou d'air d'aspiration ou les trous de la première combinaison de trous d'aspiration étant chacun fermés le long du trajet de transport au moyen du corps de commande (132),
dans lequel en particulier l'axe de rotation (R₁₃) du premier tambour de transport (13) et l'axe de rotation (R₁₂) dudit au moins un autre tambour de transport (12) étant agencés l'un au-dessus de l'autre dans un plan vertical.

8. Agencement de transport (100) selon l'une des revendications 4 à 7, **caractérisé en ce que** l'axe de rotation (R₁₃) du premier tambour de transport (13) et l'axe de rotation (R₁₄) du deuxième tambour de transport (14) sont agencés l'un au-dessus de l'autre dans un plan vertical.

9. Agencement de transport (100) selon l'une des revendications 4 à 8, **caractérisé en ce que** le premier tambour de transport (13) comporte sur sa face extérieure au moins un corps annulaire (130), de préférence rigide, ledit au moins un corps annulaire (130) du premier tambour de transport (13) comportant des cavités de réception des articles (20) en forme de tige, agencées les unes derrière les autres à intervalles réguliers dans la direction circonférentielle du premier tambour de transport (13),
et/ou **en ce que** le deuxième tambour de transport (14) présente sur le côté extérieur au moins un corps annulaire (130), de préférence rigide, ledit au moins un corps annulaire (130) du deuxième tambour de transport (14) présentant, dans la direction circonférentielle du deuxième tambour de transport (14), des cavités de réception pour les articles (20) en forme de tige agencées à intervalles réguliers les unes derrière les autres,
dans lequel en particulier le corps annulaire du premier tambour de transport (13) et le corps annulaire du deuxième tambour de transport (14) coopérant entre eux pour le transport des articles (20) en forme de tige, de sorte que les articles (20) en forme de tige transportés sont transférés ou sont aptes à être transférés depuis les cavités de réception du corps annulaire du premier tambour de transport (13) dans les cavités de réception du corps annulaire du deuxième tambour de transport (14) et, après le transport des articles (20) en forme de tige sur le deuxième tambour de transport (14), les articles (20) en forme de tige sont transférés ou sont aptes à être transférés depuis les cavités de réception du corps annulaire du deuxième tambour de transport (14) dans les cavités de réception du corps annulaire du premier tambour de transport (13), et **en ce que**, par rapport à l'axe de rotation (R₁₃) du premier tambour de transport (13) ou par rapport à l'axe de rotation (R₁₄) du deuxième tambour de transport (14), ledit au moins un corps annulaire du premier tambour de transport (13) est décalé dans la direction axiale par rapport audit au moins un corps annulaire du deuxième tambour de transport (14),
et/ou dans lequel en particulier le corps annulaire du deuxième tambour de transport (14) présente une largeur axiale longitudinale ou axiale plus petite que le corps annulaire du premier tambour de transport (13).

10. Agencement de transport (100) selon l'une des revendications 4 à 9, **caractérisé en ce qu'**il est prévu sur le premier tambour de transport (13) au moins un dispositif de contrôle pour contrôler les articles (20) en forme de tige transportés sur le premier tambour de transport (13) et/ou, sur le deuxième tambour de transport (14), au moins un dispositif de contrôle pour contrôler les articles (20) en forme de tige transportés sur le deuxième tambour de transport (14) et/ou, sur ledit au moins un autre tambour de transport (12), au moins un dispositif de contrôle pour contrôler les articles (20) en forme de tige transportés sur ledit au moins un autre tambour de transport (12),
et/ou **en ce que**, le long des trajets de transport des articles (20) en forme de tige sur le premier tambour de transport (13) et sur le deuxième tambour de transport (14) et, le cas échéant, sur ledit au moins un autre tambour de transport (12), les articles (20) en forme de tige à transporter ou transportés ne sont pas déplacés dans la direction axiale longitudinale dans les cavités de réception des tambours de transport, en particulier décalés dans la direction axiale longitudinale,
et/ou **en ce que** les cavités de réception (31) du deuxième tambour de transport (14) présentent chacune plusieurs, en particulier deux, trous d'aspiration d'air, les trous d'aspiration d'air des cavités de réception étant agencés les uns à côté des autres par rapport à l'axe de rotation (R₁₄) du deuxième tambour de transport (14), les cavités de réception étant chacune aptes à être mises en dépression par l'intermédiaire des trous d'aspiration d'air; par rapport au sens de transport des articles (20) en forme de tige sur le deuxième tambour de transport (14), lors de la réception d'articles (20) en forme de tige dans la zone de transfert depuis le premier tambour de transport (13), plusieurs trous d'aspiration d'air ou tous les trous d'aspiration d'air des cavités de réception recevant les articles respectifs du deuxième tambour de transport (14) sont mises en dépression ou aptes à être mises en dépression et le long du trajet de transport des articles (20) en forme de tige sur le deuxième tambour de transport (14) jusqu'à la zone de transfert des articles (20) en forme de tige, dans laquelle les articles (20) en forme de tige sont transférés ou aptes à être transférés du deuxième tambour de transport (14) au premier tambour de transport (13), en particulier en retour, moins de trous d'aspiration d'air ou seulement un trou d'air d'aspiration de chaque cavité de réception sont ou est mis en dépression,
dans lequel en particulier les trous d'aspiration d'air du deuxième tambour de transport (14) lors du transfert des articles (20) en forme de tige transportés sur le deuxième tambour de transport (14) depuis les cavités de réception (31) respectives du deuxième tambour de transport (14) vers les cavités de réception (21, 22) respectives du premier tambour de transport (13), étant ventilés dans la zone de transfert entre le deuxième tambour de transport (14) et le premier tambour de transport (13), de sorte qu'aucune dépression ne s'applique aux trous d'aspiration d'air de chaque cavité de réception du deuxième tambour de transport (14) délivrant l'article (20) en forme de tige.

11. Agencement de transport (100) selon l'une des revendications 4 à 9, **caractérisé en ce que** le deuxième tambour de transport (14) présente un dispositif (50) de nettoyage de cavités, en particulier au moins une ou plusieurs soupapes de commutation, pour nettoyer les cavités de réception, dans lequel en particulier le dispositif (50) de nettoyage de cavités étant conçu de telle sorte que, pendant le transport d'articles (20) en forme de tige sur le deuxième tambour de transport (14), lors de la rotation du tambour de transport (14), les cavités de réception (31) occupées par des articles (20) en forme de tige ne sont pas nettoyées et les cavités de réception (31) qui ne sont pas occupées par des articles (20) en forme de tige sont nettoyées.

12. Machine à tambour (F) de l'industrie de transformation du tabac, en particulier machine de pose de filtres ou machine de fabrication de filtres ou machine de préparation de filtres, comportant un tambour de transport (13) selon l'une quelconque des revendications 1 à 3 ou comportant un agencement de transport (100) selon l'une quelconque des revendications 4 à 11.

13. Procédé de transport transversal d'articles (20) en forme de tige de l'industrie de transformation du tabac, en particulier de cigarettes à filtre et/ou de tiges de filtre et/ou de segments de tige de filtre, utilisant un tambour de transport (13) selon l'une quelconque des revendications 1 à 3 ou utilisant un agencement de transport (100) selon l'une quelconque des revendications 4 à 11.
